(19) Europäisches Patentamt
European Patent Office
Office européen des brevets

(11) EP 2 947 987 B1

(12) **EUROPEAN PATENT SPECIFICATION**

(45) Date of publication and mention of the grant of the patent:
**08.08.2018 Bulletin 2018/32**

(21) Application number: **14743486.4**

(22) Date of filing: **24.01.2014**

(51) Int Cl.:
***A01N 43/40*** *(2006.01)* ***A01P 13/00*** *(2006.01)*
***A01N 43/60*** *(2006.01)*

(86) International application number:
**PCT/US2014/012885**

(87) International publication number:
**WO 2014/116910 (31.07.2014 Gazette 2014/31)**

# (54) HERBICIDAL COMPOSITIONS OF PYRIDINE-2-CARBOXYLIC ACIDS AND ACCASE INHIBITORS

HERBIZIDE ZUSAMMENSETZUNGEN AUS PYRIDIN-2-CARBONSÄUREN UND ACCASE-INHIBITOREN

COMPOSITIONS HERBICIDES D'ACIDES PYRIDINE-2-CARBOXYLIQUES ET D'INHIBITEURS D'ACCASE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.01.2013 US 201361756930 P**

(43) Date of publication of application:
**02.12.2015 Bulletin 2015/49**

(73) Proprietor: **Dow AgroSciences LLC**
**Indianapolis, IN 46268 (US)**

(72) Inventors:
- **YERKES, Carla N.**
  **Crawfordsville, IN 47933 (US)**
- **SATCHIVI, Norbert M.**
  **Carmel, IN 46074 (US)**
- **BANGEL, Bryston L.**
  **Camby, IN 46113 (US)**

(74) Representative: **f & e patent**
**Fleischer, Engels & Partner mbB, Patentanwälte**
**Braunsberger Feld 29**
**51429 Bergisch Gladbach (DE)**

(56) References cited:
**US-A- 4 133 675**
**US-A1- 2009 062 121**
**US-B2- 7 314 849**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 947 987 B1

## Description

### Background

The protection of crops from weeds and other vegetation which inhibit crop growth is a constantly recurring problem in agriculture. To help combat this problem, researchers in the field of synthetic chemistry have produced an extensive variety of chemicals and chemical formulations effective in the control of such unwanted growth. Chemical herbicides of many types have been disclosed in the literature and a large number are in commercial use. However, there remains a need for compositions and methods that are effective in controlling undesirable vegetation.

US2011/0287933 A1 describes three component herbicidal combinations for controlling harmful plants in oilseed rape crops, wherein the first component is glufosinate, L-glufosinate, or bialaphos or a derivative thereof, the second component is, *e.g.*, 4-amino-3-chloro-6-(4-chloro-2-fluoro-3-methoxyphenyl)-pyridine-2-carboxylic acid or an ester thereof, and the third component can be, *e.g.*, haloxyfop-P, fluazifop-P-butyl, haloxyfop-P-methyl, quizalofop-P, or quizalofop-P-ethyl. US 2009/0062121 describes synergistic herbicides containing halauxifen(derivatives) with e.g. cyhalofop, clodinafop or fenoxaprop.

### Summary

Provided herein are herbicidal compositions comprising an herbicidally effective amount of (a) a compound of the formula (I)

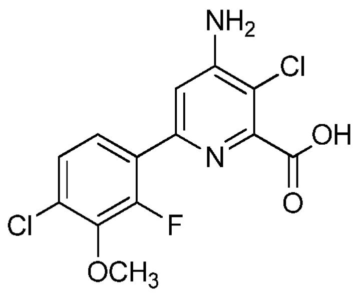

(I)

or an agriculturally acceptable salt or ester of thereof, and (b) an aryloxyphenoxy propionate ACCase inhibitor herbicide selected from the group consisting of fluazifop-P, haloxyfop-P, and quizalofop-P or an agriculturally acceptable salt or ester thereof. The compositions may also contain an agriculturally acceptable adjuvant or carrier.

Also provided are methods of controlling undesired vegetation comprising applying (a) a compound of formula (I) or an agriculturally acceptable ester or salt thereof and (b) an aryloxyphenoxy propionate ACCase inhibitor herbicide selected from the group consisting of fluazifop-P, haloxyfop-P, and quizalofop-P or an agriculturally acceptable salt or ester thereof.

### Detailed Description

#### DEFINITIONS

As used herein, the compound of formula (I) has the following structure:

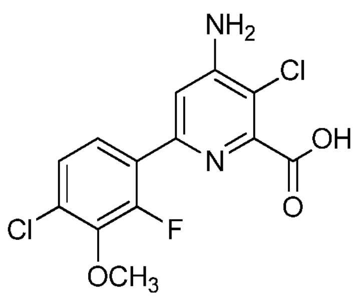

(I)

The compound of formula (I) can be identified by the name 4-amino-3-chloro-6-(4-chloro-2-fluoro-3-methoxyphenyl)-pyridine-2-carboxylic acid and has been described in U.S. Patent 7,314,849 (B2). Exemplary uses of the compound of the formula (I) include controlling undesirable vegetation, including *e.g.*, grass, broadleaf and sedge weeds, in multiple non-crop and cropping situations.

As used herein, fluazifop-P is (*R*)-2-[4-[[5-(trifluromethyl)-2-pyridinyl]oxy]phenoxy]propanoic acid. Its herbicidal activity is summarized in Tomlin, C. D. S., Ed. The Pesticide Manual: A World Compendium, 15th ed.; BCPC: Alton, 2009 (hereafter "The Pesticide Manual"). The butyl ester of fluazifop-P is specifically identified in *The Pesticide Manual.* Exemplary uses of fluazifop-P-butyl identified in *The Pesticide Manual* include post-emergence control of wild oats, volunteer cereals, and annual and perennial grass weeds in oilseed rape, sugar beet, fodder beet, potatoes, vegetables, cotton, soya beans, various fruits, sunflowers, alfalfa, ornamentals, and other broad-leaved crops.

As used herein, haloxyfop-P is (*R*)-2-[4-[[3-chloro-5-(trifluromethyl)-2-pyridinyl]oxy]phenoxy]propanoic acid. Its herbicidal activity is summarized in *The Pesticide Manual*. The methyl ester of haloxyfop-P is specifically identified in *The Pesticide Manual.* Exemplary uses of haloxyfop-P-methyl identified in *The Pesticide Manual* include post-emergence control of annual and perennial grasses in oilseed rape, sugar beet, fodder beet, potatoes, leaf vegetables, onions, flax, cotton, soya beans, sunflowers, vines, and strawberries.

As used herein, quizalofop-P is (*R*)-2-[4-[(6-chloro-2-quinoxalinyl)oxy]phenoxy]propanoic acid. Its herbicidal activity is summarized in *The Pesticide Manual*. The ethyl and tetrahydrofurfuryl esters of quizalofop-P are specifically identified in *The Pesticide Manual.* Exemplary uses of the ethyl ester identified in *The Pesticide Manual* include selective post-emergence control of annual and perennial weeds in potatoes, soya beans, sugar beet, peanuts, oilseed rape, sunflowers, vegetables, cotton, and flax. Exemplary uses of the tetrahydrofurfuryl identified in *The Pesticide Manual* include control of annual grasses and perennial grasses in oilseed rape, sugar beet, fodder beet, potatoes, linseed, sunflowers, peas, field beans and other pulse crops.

As used herein, propargyl refers to the 2-propynyl group: $HC{\equiv}C\text{-}CH_2\text{-}$.

As used herein, control of or controlling undesirable vegetation means killing or preventing the vegetation, or causing some other adversely modifying effect to the vegetation, such as deviations from natural growth or development, regulation, desiccation, retardation, and the like.

As used herein, herbicide and herbicidal active ingredient mean a compound that controls undesirable vegetation when applied in an appropriate amount.

As used herein, a herbicidally effective or vegetation controlling amount is an amount of herbicidal active ingredient the application of which controls the relevant undesirable vegetation.

As used herein, applying a herbicide or herbicidal composition means delivering it directly to the targeted vegetation or to the locus thereof or to the area where control of undesired vegetation is desired. Methods of application include, but are not limited to preemergence, postemergence, foliar, soil, and in-water applications. Described herein are methods of controlling undesirable vegetation by applying certain herbicide combinations or compositions.

As used herein, plants and vegetation include, but are not limited to, dormant seeds, germinant seeds, emerging seedlings, plants emerging from vegetative propagules, immature vegetation, and established vegetation.

As used herein, agriculturally acceptable salts and esters refer to salts and esters that exhibit herbicidal activity, or that are or can be converted in plants, water, or soil to the referenced herbicide. Exemplary agriculturally acceptable esters are those that are or can by hydrolyzed, oxidized, metabolized, or otherwise converted, *e.g.*, in plants, water, or soil, to the corresponding carboxylic acid which, depending on the pH, may be in the dissociated or undissociated form.

Exemplary salts include those derived from alkali or alkaline earth metals and those derived from ammonia and amines. Exemplary cations include sodium, potassium, magnesium, and aminium cations of the formula:

$$R^1R^2R^3R^4N^+$$

wherein $R^1$, $R^2$, $R^3$ and $R^4$ each, independently represents hydrogen or $C_1$-$C_{12}$ alkyl, $C_3$-$C_{12}$ alkenyl or $C_3$-$C_{12}$ alkynyl, each of which is optionally substituted by one or more hydroxy, $C_1$-$C_4$ alkoxy, $C_1$-$C_4$ alkylthio or phenyl groups, provided that $R^1$, $R^2$, $R^3$ and $R^4$ are sterically compatible. Additionally, any two of $R^1$, $R^2$, $R^3$ and $R^4$ together may represent an aliphatic difunctional moiety containing one to twelve carbon atoms and up to two oxygen or sulfur atoms. Salts can be prepared by treatment with a metal hydroxide, such as sodium hydroxide, with an amine, such as ammonia, trimethylamine, diethanolamine, 2-methylthiopropylamine, bisallylamine, 2-butoxyethylamine, morpholine, cyclododecylamine, or benzylamine or with a tetraalkylammonium hydroxide, such as tetramethylammonium hydroxide or choline hydroxide.

Exemplary esters include those derived from $C_1$-$C_{12}$ alkyl, $C_3$-$C_{12}$ alkenyl, $C_3$-$C_{12}$ alkynyl or $C_7$-$C_{10}$ aryl-substituted alkyl alcohols, such as methyl alcohol, isopropyl alcohol, 1-butanol, 2-ethylhexanol, butoxyethanol, methoxypropanol, allyl alcohol, propargyl alcohol, cyclohexanol or unsubstituted or substituted benzyl alcohols. Benzyl alcohols may be substituted with from 1-3 substituents independently selected from halogen, $C_1$-$C_4$ alkyl or $C_1$-$C_4$ alkoxy. Esters can be prepared by coupling of the acids with the alcohol using any number of suitable activating agents such as those used for peptide couplings such as dicyclohexylcarbodiimide (DCC) or carbonyl diimidazole (CDI); by reacting the acids

with alkylating agents such as alkylhalides or alkylsulfonates in the presence of a base such as triethylamine or lithium carbonate; by reacting the corresponding acid chloride of an acid with an appropriate alcohol; by reacting the corresponding acid with an appropriate alcohol in the presence of an acid catalyst or by transesterification.

As used herein, weight ratios of mixtures are calculated using the acid equivalent weight(s) of any compounds in the mixture that are salts or esters.

## COMPOSITIONS AND METHODS

Provided herein are herbicidal compositions comprising an herbicidally effective amount of (a) a compound of the formula (I)

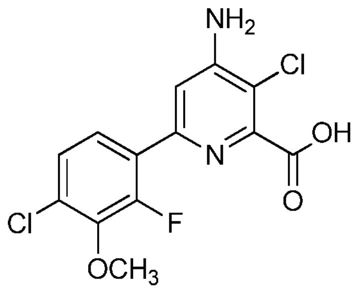

(I)

or an agriculturally acceptable salt or ester of thereof, and (b) an aryloxyphenoxy propionate ACCase inhibitor herbicide selected from the group consisting of fluazifop-P, haloxyfop-P, and quizalofop-P or an agriculturally acceptable salt or ester thereof, provided that the composition does not contain glufosinate or its salts, L-glufosinate or its salts, or bialaphos or its salts.

Also provided are methods of controlling undesirable vegetation comprising contacting the vegetation or the locus thereof, *i.e.*, the area adjacent to the plant, with or applying to the soil or water to prevent the emergence or growth of vegetation an herbicidally effective amount of the compound of formula (I) or an agriculturally acceptable salt or ester thereof (b) an aryloxyphenoxy propionate ACCase inhibitor herbicide selected from the group consisting of fluazifop-P, haloxyfop-P, and quizalofop-P or an agriculturally acceptable salt or ester thereof. In certain embodiments, the methods employ the compositions described herein.

Furthermore, in some embodiments, the combination of compound (I) or agriculturally acceptable salt or ester thereof and (b) an aryloxyphenoxy propionate ACCase inhibitor herbicide selected from the group consisting of fluazifop-P, haloxyfop-P, and quizalofop-P or an agriculturally acceptable salt or ester thereof exhibits synergism, *e.g.*, the herbicidal active ingredients are more effective in combination than when applied individually. Synergism has been defined as "an interaction of two or more factors such that the effect when combined is greater than the predicted effect based on the response of each factor applied separately." Senseman, S., Ed. Herbicide Handbook. 9th ed. Lawrence: Weed Science Society of America, 2007. In certain embodiments, the compositions exhibit synergy as determined by the Colby's equation. Colby, S. R. Calculation of the synergistic and antagonistic response of herbicide combinations. Weeds 1967, 15, 20-22.

In certain embodiments of the compositions and methods described herein, the the carboxylic acid of formula (I) is employed. In certain embodiments, a carboxylate salt of the compound of formula (I) is employed. In certain embodiments, a $C_1$-$C_4$ alkyl ester, *e.g.*, methyl ester, is employed. In certain embodiments, a $C_7$-$C_{10}$ aryl-substituted alkyl ester, *e.g.*, unsubstituted benzyl ester, is employed. In certain embodiments, a $C_3$-$C_{12}$ alkynyl ester, *e.g.*, propargyl ester, is employed.

In some embodiments, the compound of formula (I) or salt or ester thereof and (b) an aryloxyphenoxy propionate ACCase inhibitor herbicide selected from the group consisting of fluazifop-P, haloxyfop-P, and quizalofop-P or an agriculturally acceptable salt or ester thereof are formulated in one composition, tank-mixed, applied simultaneously, or applied sequentially.

Herbicidal activity (control of undesirable vegetation) is exhibited by the compositions when they are applied directly to the plant or to the locus of, *i.e.*, area adjacent to the plant at any stage of growth. The effect observed depends upon the plant species to be controlled, the stage of growth of the plant, the application parameters of dilution and spray drop size, the particle size of solid components, the environmental conditions at the time of use, the specific compound employed, the specific adjuvants and carriers employed, the soil type, and the like, as well as the amount of chemical applied. These and other factors can be adjusted to promote non-selective or selective herbicidal action. In some embodiments, the compositions described herein are applied as a post-emergence application, pre-emergence application, or in-water application to flooded paddy rice or water bodies (*e.g.*, ponds, lakes and streams), to relatively immature undesirable vegetation to achieve the maximum control of weeds.

In some embodiments, the compositions and methods provided herein are utilized to control weeds in crops, including but not limited to winter/spring oilseed rape, winter/spring canola, vegetables, Brassica spp, ornamentals, rice, wheat, triticale, barley, oats, rye, sorghum, corn/maize, sunflower, row crops, pastures, grasslands, rangelands, fallowland, sugarcane, turf, tree and vine orchards, aquatics, and industrial vegetation management and rights-of-way.

The compositions and methods provided herein are utilized to control undesirable vegetation. Undesirable vegetation includes, but is not limited to, undesirable vegetation that occurs in oilseed rape, canola, vegetables, *Brassica* spp., ornamentals, rice, wheat, triticale, barley, oats, rye, sorghum, corn/maize, sunflower, row crops, pastures, grasslands, rangelands, fallowland, sugarcane, turf, tree and vine orchards, aquatics, and industrial vegetation management (IVM) and rights-of-way.

In some embodiments, the methods provided herein are utilized to control undesirable vegetation in oilseed rape, canola, drilled crops and cereal crops. In certain embodiments, the undesirable vegetation is *Alopecurus myosuroides* Huds. (blackgrass, ALOMY), *Apera spica-venti* (L.) Beauv. (windgrass, APESV), *Avena fatua* L. (wild oat, AVEFA), *Bromus tectorum* L. (downy brome, BROTE), *Lolium multiflorum* Lam. (Italian ryegrass, LOLMU), *Lolium rigidum* (rigid ryegrass, LOLRI), *Lolium multiflorum subsp. Gaudini* (annual ryegrass, LOLMG), *Phalaris minor* Retz. (littleseed canarygrass, PHAMI), *Poa annua* L. (annual bluegrass, POAAN), *Setaria pumila* (Poir.) Roemer & J.A. Schultes (yellow foxtail, SETLU), *Setaria viridis* (L.) Beauv. (green foxtail, SETVI), *Cirsium arvense* (L.) Scop. (Canada thistle, CIRAR), *Galium aparine* L. (catchweed bedstraw, GALAP), *Kochia scoparia* (L.) Schrad. (kochia, KCHSC), *Lamium purpureum* L. (purple deadnettle , LAMPU), *Matricaria recutita* L. (wild chamomile, MATCH), *Matricaria matricarioides* (Less.) Porter (pineappleweed, MATMT), *Papaver rhoeas* L. (common poppy, PAPRH), *Polygonum convolvulus* L. (wild buckwheat, POLCO), *Salsola tragus* L. (Russian thistle, SASKR), *Stellaria media* (L.) Vill. (common chickweed, STEME), *Veronica persica* Poir. (Persian speedwell, VERPE), *Viola arvensis* Murr. (field violet, VIOAR), or *Viola tricolor* L. (wild violet, VIOTR).

In some embodiments, the compositions and methods provided herein are utilized to control undesirable vegetation in rice. In certain embodiments, the undesirable vegetation is *Brachiaria platyphylla* (Groseb.) Nash (broadleaf signalgrass, BRAPP), *Digitaria sanguinalis* (L.) Scop. (large crabgrass, DIGSA), *Echinochloa crus-galli* (L.) P. Beauv. (barnyardgrass, ECHCG), *Echinochloa colonum* (L.) LINK (junglerice, ECHCO), *Echinochloa oryzoides* (Ard.) Fritsch (early watergrass, ECHOR), *Echinochloa oryzicola* (Vasinger) Vasinger (late watergrass, ECHPH), *Ischaemum rugosum* Salisb. (saramollagrass, ISCRU), *Leptochloa chinensis* (L.) Nees (Chinese sprangletop, LEFCH), *Leptochloa fascicularis* (Lam.) Gray (bearded sprangletop, LEFFA), *Leptochloa panicoides* (Presl.) Hitchc. (Amazon sprangletop, LEFPA), *Panicum dichotomiflorum* (L.) Michx. (Fall panicum, PANDI), *Paspalum dilatatum* Poir. (dallisgrass, PASDI), *Cyperus difformis* L. (smallflower flatsedge, CYPDI), *Cyperus esculentus* L. (yellow nutsedge, CYPES), *Cyperus iria* L. (rice flatsedge, CYPIR), *Cyperus rotundus* L. (purple nutsedge, CYPRO), *Eleocharis* species (ELOSS), *Fimbristylis miliacea* (L.) Vahl (globe fringerush, FIMMI), *Schoenoplectus juncoides* Roxb. (Japanese bulrush, SPCJU), *Schoenoplectus maritimus* L. (sea clubrush, SCPMA), *Schoenoplectus mucronatus* L. (ricefield bulrush, SCPMU), *Aeschynomene* species, (jointvetch, AESSS), *Alternanthera philoxeroides* (Mart.) Griseb. (alligatorweed, ALRPH), *Alisma plantago-aquatica* L. (common waterplantain, ALSPA), *Amaranthus* species, (pigweeds and amaranths, AMASS), *Ammannia coccinea* Rottb. (redstem, AMMCO), *Eclipta alba* (L.) Hassk. (American false daisy, ECLAL), *Heteranthera limosa* (SW.) Willd./Vahl (ducksalad, HETLI), *Heteranthera reniformis* R. & P. (roundleaf mudplantain, HETRE), *Ipomoea hederacea* (L.) Jacq. (ivyleaf morningglory, IPOHE), *Lindernia dubia* (L.) Pennell (low false pimpernel, LIDDU), *Monochoria korsakowii* Regel & Maack (monochoria, MOOKA), *Monochoria vaginalis* (Burm. F.) C. Presl ex Kuhth, (monochoria, MOOVA), *Murdannia nudiflora* (L.) Brenan (doveweed, MUDNU), *Polygonum pensylvanicum* L., (Pennsylvania smartweed, POLPY), *Polygonum persicaria* L. (ladysthumb, POLPE), *Polygonum hydropiperoides* Michx. (mild smartweed, POLHP), *Rotala indica* (Willd.) Koehne (Indian toothcup, ROTIN), *Sagittaria* species, (arrowhead, SAGSS), *Sesbania exaltata* (Raf.) Cory/Rydb. Ex Hill (hemp sesbania, SEBEX), or *Sphenoclea zeylanica* Gaertn. (gooseweed, SPDZE).

In some embodiments, the compositions and methods provided herein are utilized to control undesirable vegetation in range and pasture. In certain embodiments, the undesirable vegetation is *Ambrosia artemisiifolia* L. (common ragweed, AMBEL), *Cassia obtusifolia* (sickle pod, CASOB), *Centaurea maculosa* auct. non Lam. (spotted knapweed, CENMA), *Cirsium arvense* (L.) Scop. (Canada thistle, CIRAR), *Convolvulus arvensis* L. (field bindweed, CONAR), *Euphorbia esula* L. (leafy spurge, EPHES), *Lactuca serriola* L./Torn. (prickly lettuce, LACSE), *Plantago lanceolata* L. (buckhorn plantain, PLALA), *Rumex obtusifolius* L. (broadleaf dock, RUMOB), *Sida spinosa* L. (prickly sida, SIDSP), *Sinapis arvensis* L. (wild mustard, SINAR), *Sonchus arvensis* L. (perennial sowthistle, SONAR), *Solidago* species (goldenrod, SOOSS), *Taraxacum officinale* G.H. Weber ex Wiggers (dandelion, TAROF), *Trifolium repens* L. (white clover, TRFRE), or *Urtica dioica* L. (common nettle, URTDI).

In some embodiments, the compositions and methods provided herein are utilized to control undesirable vegetation found in row crops and vegetable crops. In certain embodiments, the undesirable vegetation is *Alopecurus myosuroides* Huds. (blackgrass, ALOMY), *Avena fatua* L. (wild oat, AVEFA), *Brachiaria platyphylla* (Groseb.) Nash

(broadleaf signalgrass, BRAPP), *Digitaria sanguinalis* (L.) Scop. (large crabgrass, DIGSA), *Echinochloa crus-galli* (L.) P. Beauv. (barnyardgrass, ECHCG), *Echinochloa colonum* (L.) Link (junglerice, ECHCO), *Lolium multiflorum* Lam. (Italian ryegrass, LOLMU), *Panicum dichotomiflorum* Michx. (Fall panicum, PANDI), *Panicum miliaceum* L. (wild-proso millet, PANMI), *Setaria faberi* Herrm. (giant foxtail, SETFA), *Setaria viridis* (L.) Beauv. (green foxtail, SETVI), *Sorghum halepense* (L.) Pers. (Johnsongrass, SORHA), *Sorghum bicolor* (L.) Moench ssp. *Arundinaceum* (shattercane, SORVU), *Cyperus esculentus* L. (yellow nutsedge, CYPES), *Cyperus rotundus* L. (purple nutsedge, CYPRO), *Abutilon theophrasti* Medik. (velvetleaf, ABUTH), *Amaranthus* species (pigweeds and amaranths, AMASS), *Ambrosia artemisiifolia* L. (common ragweed, AMBEL), *Ambrosia psilostachya* DC. (Western ragweed, AMBPS), *Ambrosia trifida* L. (giant ragweed, AMBTR), *Asclepias syriaca* L. (common milkweed, ASCSY), *Chenopodium album* L. (common lambsquarters, CHEAL), *Cirsium arvense* (L.) Scop. (Canada thistle, CIRAR), *Commelina benghalensis* L. (tropical spiderwort, COMBE), *Datura stramonium* L. (jimsonweed, DATST), *Daucus carota* L. (wild carrot, DAUCA), *Euphorbia heterophylla* L. (wild poinsettia, EPHHL), *Erigeron bonariensis* L. (hairy fleabane, ERIBO), *Erigeron canadensis* L. (Canadian fleabane, ERICA), *Helianthus annuus* L. (common sunflower, HELAN), *Jacquemontia tamnifolia* (L.) Griseb. (smallflower morningglory, IAQTA), *Ipomoea hederacea* (L.) Jacq. (ivyleaf morningglory, IPOHE), *Ipomoea lacunosa* L. (white morningglory, IPOLA), *Lactuca serriola* L./Torn. (prickly lettuce, LACSE), *Portulaca oleracea* L. (common purslane, POROL), *Sida spinosa* L. (prickly sida, SIDSP), *Sinapis arvensis* L. (wild mustard, SINAR), *Solanum ptychanthum* Dunal (eastern black nightshade, SOLPT), or *Xanthium strumarium* L. (common cocklebur, XANST).

In some embodiments, the compositions and methods provided herein are utilized to control undesirable vegetation consisting of grass, broadleaf and sedge weeds.

In some embodiments, the compositions and methods provided herein are used to control *Amaranthus retroflexus* (redroot pigweed, AMARE), *Chenopodium album* (common lambsquarters, CHEAL), *Centaurea cyanus* (cornflower, CENCY), *Descurainia sophia* (flixweed, DESSO), *Conyza canadensis* (horseweed / marestail, ERICA), *Conyza bonariensis* (fleabane, ERIBO), *Erodium cicutarium* (storksbill / redstem filaree, EROCI), *Fumaria officinalis* (common fumitory, FUMOF), *Galeopsis tetrahit* (common hempnettle, GAETE), *Galium aparine* (bedstraw, catchweed / cleavers, GALAP), *Geranium dissectum* (cutleaf geranium, GERDI), *Geranium pusillum* (smallflower geranium, GERPU), *Glycine max* (volunteer soybean, GLXMA), *Lamium amplexicaule* (henbit, LAMAM), *Lamium purpuruem* (purple deadnettle, LAMPU), *Papaver rhoeas* (common poppy, PAPRH), *Stellaria media* (common chickweed, STEME), *Veronica persica* (Persian speedwell, VERPE), *Linum usitatissimum* (volunteer flax, LIUUT), *Geranium carolinianum* (Carolina Geranium, GERCA), or *Vicia villosa* (hairy vetch, VICVI).

In certain embodiments, the compositions and methods provided herein are used to provide synergistic control of BRSNW, CHEAL, VIOTR, STEME, AVEFA, DIGSA, ABUTH, CIRAR, SETFA, SORVU, AMARE, EPHHL, CYPES, IPOHE, GLXMA, HELAN, OEOBI, LOLMU, or SORHA.

In certain embodiments of the compositions and methods described herein, the combination of herbicidally active ingredients is comprised of (a) the compound of formula (I) or agriculturally acceptable salt or ester thereof and (b) fluazifop-P or an agriculturally acceptable salt or ester thereof, and the two components are used in amounts such that the weight ratio of (a) to (b) is from about 1-40 of (a) to about 35-560 of (b). In certain embodiments the weight ratio of these components is from about 1-40 of (a) to about 70-210 of (b). In certain embodiments the weight ratio of these components is from about 1.25-5 of (a) to about 70-210 of (b). In certain embodiments, the weight ratio of (a) the compound of formula (I) or salt or ester thereof to (b) fluazifop-P or an agriculturally acceptable salt or ester thereof is from about 1:560 to about 1:1. In one embodiment, the composition comprises (a) the methyl ester of the compound of formula (I) and (b) fluazifop-P or an agriculturally acceptable salt or ester thereof, wherein the weight ratio of the two components is from about 1.25-5 of (a) to about 70-210 of (b). In one embodiment, the combination comprises (a) the methyl ester of the compound of formula (I) and (b) fluazifop-P or an agriculturally acceptable salt or ester thereof wherein the weight ratio is 1:170 to 1:10.

In some embodiments, the method comprises applying the compound of formula (I) or salt or ester thereof at a rate of 1-40 grams acid equivalent per hectare (g ae/ha) and applying fluazifop-P or an agriculturally acceptable salt or ester thereof at a rate of 35-560 g ae/ha. In some embodiments, the method comprises applying the compound of formula (I) or salt or ester thereof at a rate of 1-40 g ae/ha and applying fluazifop-P or an agriculturally acceptable salt or ester thereof at a rate of 70-210 g ae/ha. In some embodiments, the method comprises applying the compound of formula (I) or salt or ester thereof at a rate of 1.25-5 g ae/ha and applying fluazifop-P or an agriculturally acceptable salt or ester thereof at a rate of 70-210 g ae/ha.

In certain embodiments of the compositions and methods described herein, the combination of herbicidally active ingredients is comprised of (a) the compound of formula (I) or agriculturally acceptable salt or ester thereof and (b) haloxyfop-P or an agriculturally acceptable salt or ester thereof, and the two components are used in amounts such that the weight ratio of (a) to (b) is from about 1-40 of (a) to about 20-560 of (b). In certain embodiments the weight ratio of these components is from about 1-40 of (a) to about 35-150 of (b). In certain embodiments the weight ratio of these components is from about 1.25-5 of (a) to about 35-150 of (b). In certain embodiments, the weight ratio of (a) the compound of formula (I) or salt or ester thereof to (b) haloxyfop-P or an agriculturally acceptable salt or ester thereof is

from about 1:560 to about 1:1. In one embodiment, the composition comprises (a) the methyl ester of the compound of formula (I) and (b) haloxyfop-P or an agriculturally acceptable salt or ester thereof, wherein the weight ratio of the two components is from about 1.25-5 of (a) to about 35-150 of (b). In one embodiment, the combination comprises (a) the methyl ester of the compound of formula (I) and (b) haloxyfop-P or an agriculturally acceptable salt or ester thereof wherein the weight ratio is 1:120 to 1:7.

In some embodiments, the method comprises applying the compound of formula (I) or salt or ester thereof at a rate of 1-40 g ae/ha and applying haloxyfop-P or an agriculturally acceptable salt or ester thereof at a rate of 20-560 g ae/ha. In some embodiments, the method comprises applying the compound of formula (I) or salt or ester thereof at a rate of 1-40 g ae/ha and applying haloxyfop-P or an agriculturally acceptable salt or ester thereof at a rate of 35-150 g ae/ha. In some embodiments, the method comprises applying the compound of formula (I) or salt or ester thereof at a rate of 1.25-5 g ae/ha and applying haloxyfop-P or an agriculturally acceptable salt or ester thereof at a rate of 35-150 g ae/ha.

In certain embodiments of the compositions and methods described herein, the combination of herbicidally active ingredients is comprised of (a) the compound of formula (I) or agriculturally acceptable salt or ester thereof and (b) quizalofop-P or an agriculturally acceptable salt or ester thereof, and the two components are used in amounts such that the application rate of (a) and (b) is from about 1-40 g ae/ha of (a) to about 3.5-560 g ae/ha of (b). In certain embodiments the weight ratio of these components is from about 1-40 of (a) to about 3.5-150 of (b). In certain embodiments the weight ratio of these components is from about 1.25-15 of (a) to about 3.5-150 of (b). In certain embodiments, the weight ratio of (a) the compound of formula (I) or salt or ester thereof to (b) quizalofop-P or an agriculturally acceptable salt or ester thereof is from about 1:560 to about 11.2:1. In one embodiment, the composition comprises (a) the methyl ester, benzyl ester, propargyl ester, or potassium salt of the compound of formula (I) and (b) quizalofop-P or an agriculturally acceptable salt or ester thereof, wherein the weight ratio of the two components is from about 1.25-15 of (a) to about 3.5-150 of (b). In one embodiment, the combination comprises (a) the methyl ester, benzyl ester, propargyl ester, or potassium salt of the compound of formula (I) and (b) quizalofop-P or an agriculturally acceptable salt or ester thereof wherein the weight ratio is 1:120 to 4.2:1.

In some embodiments, the method comprises applying the compound of formula (I) or salt or ester thereof at a rate of 1-40 g ae/ha and applying quizalofop-P or an agriculturally acceptable salt or ester thereof at a rate of 3.5-560 g ae/ha. In some embodiments, the method comprises applying the compound of formula (I) or salt or ester thereof at a rate of 1-40 g ae/ha and applying quizalofop-P or an agriculturally acceptable salt or ester thereof at a rate of 3.5-150 g ae/ha. In some embodiments, the method comprises applying the compound of formula (I) or salt or ester thereof at a rate of 1.25-15 g ae/ha and applying quizalofop-P or an agriculturally acceptable salt or ester thereof at a rate of 3.5-150 g ae/ha.

In certain embodiments, the methods comprise contacting the undesirable vegetation or locus thereof with the herbicidally active components or applying the components to the soil or water to prevent the emergence or growth of vegetation a composition described herein. In some embodiments, the composition is applied at an application rate from about 5 grams active ingredient per hectare (g ai/ha) to about 600 g ai/ha based on the total amount of herbicidal active ingredients in the composition. In certain embodiments, the composition is applied at an application rate from about 20 g ai/ha to about 220 g ai/ha based on the total amount of active ingredients in the composition. In some embodiments, the composition is applied at an application rate from about 4.5 grams acid equivalent per hectare (g ae/ha) to about 600 g ae/ha based on the total amount of herbicidal active ingredients in the composition. In certain embodiments, the composition is applied at an application rate from about 7 g ae/ha to about 225 g ae/ha based on the total amount of active ingredients in the composition.

The components of the mixtures described herein can be applied either separately or as part of a multipart herbicidal system. In some embodiments of the methods described herein, the active ingredients are applied simultaneously, including, *e.g.*, in the form of a composition. In some embodiments, the active ingredients are applied sequentially, e.g., within 5, 10, 15, or 30 minutes of each other; 1, 2, 3, 4, 5, 10, 12, 24, 48 hour(s) of each other, or 1 week of each other.

The mixtures described herein can be applied in conjunction with one or more other herbicides to control a wider variety of undesirable vegetation. When used in conjunction with other herbicides, the composition can be formulated with the other herbicide or herbicides, tank-mixed with the other herbicide or herbicides or applied sequentially with the other herbicide or herbicides. Some of the herbicides that can be employed in conjunction with the compositions and methods described herein include, but are not limited to: 4-CPA, 4-CPB, 4-CPP, 2,4-D, 2,4-D choline salt, 2,4-D esters and amines, 2,4-DB, 3,4-DA, 3,4-DB, 2,4-DEB, 2,4-DEP, 3,4-DP, 2,3,6-TBA, 2,4,5-T, 2,4,5-TB, acetochlor, acifluorfen, aclonifen, acrolein, alachlor, allidochlor, alloxydim, allyl alcohol, alorac, ametridione, ametryn, amibuzin, amicarbazone, amidosulfuron, aminocyclopyrachlor, aminopyralid, amiprofos-methyl, amitrole, ammonium sulfamate, anilofos, anisuron, asulam, atraton, atrazine, azafenidin, azimsulfuron, aziprotryne, barban, BCPC, beflubutamid, benazolin, bencarbazone, benfluralin, benfuresate, bensulfuron-methyl, bensulide, benthiocarb, bentazon-sodium, benzadox, benzfendizone, benzipram, benzobicyclon, benzofenap, benzofluor, benzoylprop, benzthiazuron, bicyclopyrone, bifenox,

bispyribac-sodium, borax, bromacil, bromobonil, bromofenoxim, bromoxynil, brompyrazon, butachlor, butafenacil, butamifos, butenachlor, buthidazole, buthiuron, butralin, butroxydim, buturon, butylate, cacodylic acid, cafenstrole, calcium chlorate, calcium cyanamide, cambendichlor, carbasulam, carbetamide, carboxazole, chlorprocarb, carfentrazone-ethyl, CDEA, CEPC, chlomethoxyfen, chloramben, chloranocryl, chlorazifop, chlorazine, chlorbromuron, chlorbufam, chloreturon, chlorfenac, chlorfenprop, chlorflurazole, chlorflurenol, chloridazon, chlorimuron, chlornitrofen, chloropon, chlorotoluron, chloroxuron, chloroxynil, chlorpropham, chlorsulfuron, chlorthal, chlorthiamid, cinidon-ethyl, cinmethylin, cinosulfuron, cisanilide, clethodim, cliodinate, clodinafop-propargyl, clofop, clomazone, clomeprop, cloprop, cloproxydim, clopyralid, cloransulam-methyl, CMA, copper sulfate, CPMF, CPPC, credazine, cresol, cumyluron, cyanatryn, cyanazine, cycloate, cyclosulfamuron, cycloxydim, cycluron, cyhalofop-butyl, cyperquat, cyprazine, cyprazole, cypromid, dalapon, dazomet, delachlor, desmedipham, desmetryn, di-allate, dicamba, dichlobenil, dichloralurea, dichlormate, dichlorprop, dichlorprop-P, diclofop-methyl, diclosulam, diethamquat, diethatyl, difenopenten, difenoxuron, difenzoquat, diflufenican, diflufenzopyr, dimefuron, dimepiperate, dimethachlor, dimethametryn, dimethenamid, dimethenamid-P, dimexano, dimidazon, dinitramine, dinofenate, dinoprop, dinosam, dinoseb, dinoterb, diphenamid, dipropetryn, diquat, disul, dithiopyr, diuron, DMPA, DNOC, DSMA, EBEP, eglinazine, endothal, epronaz, EPTC, erbon, esprocarb, ethalfluralin, ethbenzamide, ethametsulfuron, ethidimuron, ethiolate, ethobenzamid, etobenzamid, ethofumesate, ethoxyfen, ethoxysulfuron, etinofen, etnipromid, etobenzanid, EXD, fenasulam, fenoprop, fenoxaprop, fenoxaprop-P-ethyl, fenoxaprop-P-ethyl + isoxadifen-ethyl, fenoxasulfone, fenteracol, fenthiaprop, fentrazamide, fenuron, ferrous sulfate, flamprop, flamprop-M, flazasulfuron, florasulam, fluazolate, flucarbazone, flucetosulfuron, fluchloralin, flufenacet, flufenican, flufenpyr-ethyl, flumetsulam, flumezin, flumiclorac-pentyl, flumioxazin, flumipropyn, fluometuron, fluorodifen, fluoroglycofen, fluoromidine, fluoronitrofen, fluothiuron, flupoxam, flupropacil, flupropanate, flupyrsulfuron, fluridone, flurochloridone, fluroxypyr, flurtamone, fluthiacet, fomesafen, foramsulfuron, fosamine, fumiclorac, furyloxyfen, glyphosate, halosafen, halosulfuron-methyl, haloxydine, hexachloroacetone, hexaflurate, hexazinone, imazamethabenz, imazamox, imazapic, imazapyr, imazaquin, imazethapyr, imazosulfuron, indanofan, indaziflam, iodobonil, iodomethane, iodosulfuron, iodosulfuron-ethyl-sodium, iofensulfuron, ioxynil, ipazine, ipfencarbazone, iprymidam, isocarbamid, isocil, isomethiozin, isonoruron, isopolinate, isopropalin, isoproturon, isouron, isoxaben, isoxachlortole, isoxaflutole, isoxapyrifop, karbutilate, ketospiradox, lactofen, lenacil, linuron, MAA, MAMA, MCPA esters and amines, MCPA-thioethyl, MCPB, mecoprop, mecoprop-P, medinoterb, mefenacet, mefluidide, mesoprazine, mesosulfuron, mesotrione, metam, metamifop, metamitron, metazachlor, metazosulfuron, metflurazon, methabenzthiazuron, methalpropalin, methazole, methiobencarb, methiozolin, methiuron, methometon, methoprotryne, methyl bromide, methyl isothiocyanate, methyldymron, metobenzuron, metobromuron, metolachlor, metosulam, metoxuron, metribuzin, metsulfuron, metsulfuron-methyl, molinate, monalide, monisouron, monochloroacetic acid, monolinuron, monuron, morfamquat, MSMA, naproanilide, napropamide, napropamide-M, naptalam, neburon, nicosulfuron, nipyraclofen, nitralin, nitrofen, nitrofluorfen, norflurazon, noruron, OCH, orbencarb, *ortho*-dichlorobenzene, orthosulfamuron, oryzalin, oxadiargyl, oxadiazon, oxapyrazon, oxasulfuron, oxyfluorfen, paraflufen-ethyl, parafluron, paraquat, pebulate, pelargonic acid, pendimethalin, penoxsulam, pentachlorophenol, pentanochlor, pentoxazone, perfluidone, pethoxamid, phenisopham, phenmedipham, phenmedipham-ethyl, phenobenzuron, phenylmercury acetate, picloram, picolinafen, pinoxaden, piperophos, potassium arsenite, potassium azide, potassium cyanate, pretilachlor, primisulfuron-methyl, procyazine, prodiamine, profluazol, profluralin, profoxydim, proglinazine, prohexadione-calcium, prometon, prometryn, pronamide, propachlor, propanil, propaquizafop, propazine, propham, propisochlor, propoxycarbazone, propyrisulfuron, propyzamide, prosulfalin, prosulfocarb, prosulfuron, proxan, prynachlor, pydanon, pyraclonil, pyraflufen-ethyl, pyrasulfotole, pyrazogyl, pyrazolynate, pyrazosulfuron-ethyl, pyrazoxyfen, pyribenzoxim, pyriclor, pyridafol, pyridate, pyriftalid, pyriminobac, pyrimisulfan, pyrithiobac-sodium, pyroxasulfone, pyroxsulam, quinclorac, quinmerac, quinoclamine, quinonamid, rhodethanil, rimsulfuron, saflufenacil, S-metolachlor, sebuthylazine, secbumeton, sethoxydim, siduron, simazine, simeton, simetryn, SMA, sodium arsenite, sodium azide, sodium chlorate, sulcotrione, sulfallate, sulfentrazone, sulfometuron, sulfosate, sulfosulfuron, sulfuric acid, sulglycapin, swep, TCA, tebutam, tebuthiuron, tefuryltrione, tembotrione, tepraloxydim, terbacil, terbucarb, terbuchlor, terbumeton, terbuthylazine, terbutryn, tetrafluron, thenylchlor, thiazafluron, thiazopyr, thidiazimin, thidiazuron, thiencarbazone-methyl, thifensulfuron, thifensulfuron-methyl, thiobencarb, tiocarbazil, tioclorim, topramezone, tralkoxydim, triafamone, triallate, triasulfuron, triaziflam, tribenuron, tribenuron-methyl, tricamba, triclopyr choline salt, triclopyr esters and salts, tridiphane, trietazine, trifloxysulfuron, trifluralin, triflusulfuron, trifop, trifopsime, trihydroxytriazine, trimeturon, tripropindan, tritac tritosulfuron, vernolate, xylachlor and salts, esters, optically active isomers and mixtures thereof.

In some embodiments the methods provided herein are used to control undesirable vegetation in crops that are tolerant to glyphosate, glufosinate, dicamba, phenoxy auxins, pyridyloxy auxins, aryloxyphenoxypropionates, acetyl CoA carboxylase (ACCase) inhibitors, imidazolinones, acetolactate synthase (ALS) inhibitors, 4-hydroxyphenyl-pyruvate dioxygenase (HPPD) inhibitors, protoporphyrinogen oxidase (PPO) inhibitors, triazines, or bromoxynil. Such herbicide-tolerant crops may possesses multiple or stacked traits conferring tolerance to multiple herbicides or multiple modes-of-action.

In some embodiments the methods provided herein are used to control undesirable vegetation that is a herbicide resistant or tolerant weed. Such herbicide resistant or tolerant weed may have a biotype with resistance or tolerance to

multiple herbicides, multiple chemical classes, or multiple herbicide modes-of-action. For example, the herbicide resistant or tolerant weed may have a biotype resistant or tolerant to acetolactate synthase (ALS) inhibitors, photosystem II inhibitors, acetyl CoA carboxylase (ACCase) inhibitors, synthetic auxins, photosystem I inhibitors, 5-enolpyruvylshikimate-3-phosphate (EPSP) synthase inhibitors, microtubule assembly inhibitors, lipid synthesis inhibitors, protoporphyrinogen oxidase (PPO) inhibitors, carotenoid biosynthesis inhibitors, very long chain fatty acid (VLCFA) inhibitors, phytoene desaturase (PDS) inhibitors, glutamine synthetase inhibitors, 4-hydroxyphenyl-pyruvate-dioxygenase (HPPD) inhibitors, mitosis inhibitors, cellulose biosynthesis inhibitors, herbicides with multiple modes-of-action, quinclorac, arylaminopropionic acids, difenzoquat, endothall, or organoarsenicals.

In some embodiments, the compositions described herein are employed in combination with one or more herbicide safeners, such as AD-67 (MON 4660), benoxacor, benthiocarb, brassinolide, cloquintocet (mexyl), cyometrinil, daimuron, dichlormid, dicyclonon, dimepiperate, disulfoton, fenchlorazole-ethyl, fenclorim, flurazole, fluxofenim, furilazole, harpin proteins, isoxadifen-ethyl, jiecaowan, jiecaoxi, mefenpyr-diethyl, mephenate, naphthalic anhydride (NA), oxabetrinil, R29148, 1-[4-(*N*-(2-methoxybenzoyl)sulfamoyl)phenyl]-3-methylurea, *N*-(2-methoxybenzoyl)-4-[(methylaminocarbonyl)amino]benzenesulfonamide and *N*-phenyl-sulfonylbenzoic acid amides, to enhance their selectivity. In some embodiments, the safeners are employed in rice, cereal, corn, or maize settings. In some embodiments, the safener is cloquintocet or an ester or salt thereof. In certain embodiments, cloquintocet is utilized to antagonize harmful effects of the compositions on rice and cereals. In some embodiments, the safener is cloquintocet (mexyl).

In some embodiments, compositions provided herein further comprise at least one agriculturally acceptable adjuvant or carrier. Suitable adjuvants or carriers should not be phytotoxic to valuable crops, particularly at the concentrations employed in applying the compositions for selective weed control in the presence of crops, and should not react chemically with herbicidal components or other composition ingredients. Such mixtures can be designed for application directly to weeds or their locus or can be concentrates or formulations that are normally diluted with additional carriers and adjuvants before application. They can be solids, such as, for example, dusts, granules, water-dispersible granules, or wettable powders, or liquids, such as, for example, emulsifiable concentrates, solutions, emulsions or suspensions. They can also be provided as a pre-mix or tank-mixed.

Suitable agricultural adjuvants and carriers include, but are not limited to, crop oil concentrate; nonylphenol ethoxylate; benzylcocoalkyldimethyl quaternary ammonium salt; blend of petroleum hydrocarbon, alkyl esters, organic acid, and anionic surfactant; $C_9$-$C_{11}$ alkylpolyglycoside; phosphated alcohol ethoxylate; natural primary alcohol ($C_{12}$-$C_{16}$) ethoxylate; di-*sec*-butylphenol EO-PO block copolymer; polysiloxane-methyl cap; nonylphenol ethoxylate + urea ammonium nitrate; emulsified methylated seed oil; tridecyl alcohol (synthetic) ethoxylate (8EO); tallow amine ethoxylate (15 EO); PEG(400) dioleate-99.

Liquid carriers that can be employed include water and organic solvents. The organic solvents include, but are not limited to, petroleum fractions or hydrocarbons such as mineral oil, aromatic solvents, paraffinic oils, and the like; vegetable oils such as soybean oil, rapeseed oil, olive oil, castor oil, sunflower seed oil, coconut oil, corn oil, cottonseed oil, linseed oil, palm oil, peanut oil, safflower oil, sesame oil, tung oil and the like; esters of the above vegetable oils; esters of monoalcohols or dihydric, trihydric, or other lower polyalcohols (4-6 hydroxy containing), such as 2-ethyl hexyl stearate, n-butyl oleate, isopropyl myristate, propylene glycol dioleate, di-octyl succinate, di-butyl adipate, di-octyl phthalate and the like; esters of mono, di and polycarboxylic acids and the like. Specific organic solvents include, but are not limited to toluene, xylene, petroleum naphtha, crop oil, acetone, methyl ethyl ketone, cyclohexanone, trichloroethylene, perchloroethylene, ethyl acetate, amyl acetate, butyl acetate, propylene glycol monomethyl ether and diethylene glycol monomethyl ether, methyl alcohol, ethyl alcohol, isopropyl alcohol, amyl alcohol, ethylene glycol, propylene glycol, glycerine, *N*-methyl-2-pyrrolidinone, *N*,*N*-dimethyl alkylamides, dimethyl sulfoxide, liquid fertilizers and the like. In certain embodiments, water is the carrier for the dilution of concentrates.

Suitable solid carriers include but are not limited to talc, pyrophyllite clay, silica, attapulgus clay, kaolin clay, kieselguhr, chalk, diatomaceous earth, lime, calcium carbonate, bentonite clay, Fuller's earth, cottonseed hulls, wheat flour, soybean flour, pumice, wood flour, walnut shell flour, lignin, cellulose, and the like.

In some embodiments, the compositions described herein further comprise one or more surface-active agents. In some embodiments, such surface-active agents are employed in both solid and liquid compositions, and in certain embodiments those designed to be diluted with carrier before application. The surface-active agents can be anionic, cationic or nonionic in character and can be employed as emulsifying agents, wetting agents, suspending agents, or for other purposes. Surfactants which may also be used in the present formulations are described, *inter alia*, in "McCutcheon's Detergents and Emulsifiers Annual," MC Publishing Corp., Ridgewood, New Jersey, 1998 and in "Encyclopedia of Surfactants," Vol. I-III, Chemical Publishing Co., New York, 1980-81. Surface-active agents include, but are not limited to salts of alkyl sulfates, such as diethanolammonium lauryl sulfate; alkylarylsulfonate salts, such as calciumdodecylbenzenesulfonate; alkylphenol-alkylene oxide addition products, such as nonylphenol-$C_{18}$ ethoxylate; alcohol-alkylene oxide addition products, such as tridecyl alcohol-$C_{16}$ ethoxylate; soaps, such as sodium stearate; alkylnaphthalenesulfonate salts, such as sodium dibutylnaphthalenesulfonate; dialkyl esters of sulfosuccinate salts, such as sodium di(2-ethylhexyl) sulfosuccinate; sorbitol esters, such as sorbitol oleate; quaternary amines, such as lauryl trimethylammonium

chloride; polyethylene glycol esters of fatty acids, such as polyethylene glycol stearate; block copolymers of ethylene oxide and propylene oxide; salts of mono and dialkyl phosphate esters; vegetable or seed oils such as soybean oil, rapeseed/canola oil, olive oil, castor oil, sunflower seed oil, coconut oil, corn oil, cottonseed oil, linseed oil, palm oil, peanut oil, safflower oil, sesame oil, tung oil and the like; and esters of the above vegetable oils, and in certain embodiments, methyl esters.

In some embodiments, these materials, such as vegetable or seed oils and their esters, can be used interchangeably as an agricultural adjuvant, as a liquid carrier or as a surface active agent.

Other exemplary additives for use in the compositions provided herein include but are not limited to compatibilizing agents, antifoam agents, sequestering agents, neutralizing agents and buffers, corrosion inhibitors, dyes, odorants, spreading agents, penetration aids, sticking agents, dispersing agents, thickening agents, freezing point depressants, antimicrobial agents, and the like. The compositions may also contain other compatible components, for example, other herbicides, plant growth regulants, fungicides, insecticides, and the like and can be formulated with liquid fertilizers or solid, particulate fertilizer carriers such as ammonium nitrate, urea and the like.

In some embodiments, the concentration of the active ingredients in the compositions described herein is from about 0.0005 to 98 percent by weight. In some embodiments, the concentration is from about 0.0006 to 90 percent by weight. In compositions designed to be employed as concentrates, the active ingredients, in certain embodiments, are present in a concentration from about 0.1 to 98 weight percent, and in certain embodiments about 0.5 to 90 weight percent. Such compositions are, in certain embodiments, diluted with an inert carrier, such as water, before application. The diluted compositions usually applied to weeds or the locus of weeds contain, in certain embodiments, about 0.0005 to 15.0 weight percent active ingredient and in certain embodiments contain about 0.001 to 12.0 weight percent.

The present compositions can be applied to weeds or their locus by the use of conventional ground or aerial dusters, sprayers, and granule applicators, by addition to irrigation or paddy water, and by other conventional means known to those skilled in the art.

The described embodiments and following examples are for illustrative purposes.

## EXAMPLES

Evaluation of Postemergent Herbicidal Activity. Seeds or nutlets of the desired test plant species were planted in Sun Gro Metro-Mix® 360 planting mixture, which typically has a pH of 6.0 to 6.8 and an organic matter content of about 30 percent, in plastic pots with a surface area of 64 square centimeters ($cm^2$). When required to ensure good germination and healthy plants, a fungicide treatment and/or other chemical or physical treatment was applied. The plants were grown for 7-21 days (d) in a greenhouse with an approximate 15 hour (h) photoperiod which was maintained at about 23-29 °C during the day and 22-28 °C during the night. Nutrients and water were added on a regular basis and supplemental lighting was provided with overhead metal halide 1000-Watt lamps as necessary. The plants were employed for testing when they reached the first or second true leaf stage.

A weighed amount, determined by the highest rate to be tested, of each test compound was placed in a 25 milliliter (mL) glass vial and was dissolved in 4 mL of a 97:3 volume per volume (v/v) mixture of acetone and dimethyl sulfoxide (DMSO) to obtain concentrated stock solutions. If the test compound did not dissolve readily, the mixture was warmed and/or sonicated. The concentrated stock solutions obtained were diluted with 20 mL of an aqueous mixture containing acetone, water, isopropyl alcohol, DMSO, Atplus 411F crop oil concentrate, and Triton® X-155 surfactant in a 48.5:39:10:1.5:1.0:0.02 v/v ratio to obtain spray solutions containing the highest application rates. Additional application rates were obtained by serial dilution of 12 mL of the high rate solution into a solution containing 2 mL of a 97:3 v/v mixture of acetone and DMSO and 10 mL of an aqueous mixture containing acetone, water, isopropyl alcohol, DMSO, Atplus 411F crop oil concentrate, and Triton X-155 surfactant in a 48.5:39:10:1.5:1.0:0.02 v/v ratio to obtain 1/2X, 1/4X, 1/8X and 1/16X rates of the high rate. Compound requirements are based upon a 12 mL application volume at a rate of 187 liters per hectare (L/ha). Formulated compounds were applied to the plant material with an overhead Mandel track sprayer equipped with 8002E nozzles calibrated to deliver 187 L/ha over an application area of 0.503 square meters ($m^2$) at a spray height of 18 inches (43 cm) above the average plant canopy height. Control plants were sprayed in the same manner with the solvent blank.

Treatments consisted of the methyl ester of 4-amino-3-chloro-6-(4-chloro-2-fluoro-3-methoxyphenyl)pyridine-2-carboxylic acid (Cmpd 1) as technical grade material and fluazifop-P-butyl (Fusilade® DX), haloxyfop-P-methyl (GALLANT® super), and quizalofop-P-ethyl (Assure® II) alone and in combination. The form of compound of formula (I) and fluazifop-P-butyl, haloxyfop-P-methyl, and quizalofop-P-ethyl were applied on an acid equivalent basis.

The treated plants and control plants were placed in a greenhouse as described above and watered by subirrigation to prevent wash-off of the test compounds. After 14 d, the condition of the test plants as compared with that of the untreated plants was determined visually and scored on a scale of 0 to 100 percent where 0 corresponds to no injury and 100 corresponds to complete kill. Some of the compounds tested, application rates employed, plant species tested, and results are given in Tables 1-3.

Evaluation of Postemergence Foliar-Applied Herbicidal Mixtures for Control of Weeds Common to Row Crops such as Corn and Soybeans. Seeds or nutlets of the desired test plant species were planted in a soil matrix prepared by mixing a loam or sandy loam soil (*e.g.*, 28.6 percent silt, 18.8 percent clay, and 52.6 percent sand, with a pH of about 5.8 and an organic matter content of about 1.8 percent) and calcareous grit in an 80 to 20 ratio. The soil matrix was contained in plastic pots with a surface area of 84.6 $cm^2$ and a volume of 560 cubic centimeters ($cm^3$). When required to ensure good germination and healthy plants, a fungicide treatment and/or other chemical or physical treatment was applied. The plants were grown for 7-31 d in a greenhouse with an approximate 15 h photoperiod which was maintained at about 23-29 °C during the day and 22-28 °C during the night. Nutrients (Peters Excel® 15-5-15 5-Ca 2-Mg) and water were added on a regular basis and supplemental lighting was provided with overhead metal halide 1000-Watt lamps as necessary. The plants were employed for testing when they reached the first, second, or third true leaf stage.

Treatment requirements were calculated based upon the rates being tested, the concentration of active ingredient or acid equivalent in the formulation, and a 12 mL application volume at a rate of 187 L/ha.

Treatments consisted of the potassium ($K^+$) salt of 4-amino-3-chloro-6-(4-chloro-2-fluoro-3-methoxyphenyl)-pyridine-2-carboxylic acid (Cmpd 4) formulated as a soluble liquid (SL), the propargyl ester of 4-amino-3-chloro-6-(4-chloro-2-fluoro-3-methoxyphenyl)-pyridine-2-carboxylic acid (Cmpd 2) as technical grade material, or the benzyl ester of 4-amino-3-chloro-6-(4-chloro-2-fluoro-3-methoxyphenyl)-pyridine-2-carboxylic acid (Cmpd 3) as technical grade material and quizalofop-p-ethyl (Assure® II) alone and in combination. Forms of compound of formula (I) and quizalofop-P-ethyl were applied on an acid equivalent basis.

For treatments comprised of formulated compounds, measured amounts of compounds were placed individually in 25 mL glass vials and diluted in a volume of 1.5% (v/v) Agri-Dex® crop oil concentrated to obtain 6X stock solutions. If a test compound did not dissolve readily, the mixture was warmed and/or sonicated. Application solutions were prepared by adding an appropriate amount of each stock solution (typically 2 mL) and diluted to the appropriate final concentrations with the addition of an appropriate amount of an aqueous mixture of 1.5% (v/v) crop oil concentrate and water so that the final spray solutions contained 1.25+/-0.05% (v/v) crop oil concentrate.

For treatments comprised of formulated and technical compounds, weighed amounts of the technical materials were placed individually in 25 mL glass vials and dissolved in a volume of 97:3 v/v acetone/DMSO to obtain 6X stock solutions, and measured amounts of the formulated compounds were placed individually in 25 mL glass vials and diluted in a volume of 1.5% (v/v) crop oil concentrate or water to obtain 6X stock solutions. If a test compound did not dissolve readily, the mixture was warmed and/or sonicated. Application solutions were prepared by adding an appropriate amount of each stock solution (*e.g.*, 2 mL) and diluted to the appropriate final concentrations with the addition of an appropriate amount of an aqueous mixture of 1.5% (v/v) crop oil concentrate and water so that the final spray solutions contained 1.25% (v/v) crop oil concentrate. When required, additional water and/or 97:3 v/v acetone/DMSO can be added to individual application solutions so that the final acetone and DMSO concentrations of the application solutions being compared are 16.2% and 0.5%, respectively.

All stock solutions and applications solutions were visually inspected for compound compatibility prior to application. Compound requirements are based upon a 12 mL application volume at a rate of 187 liters per hectare (L/ha). Formulated compounds were applied to the plant material with an overhead Mandel track sprayer equipped with 8002E nozzles calibrated to deliver 187 L/ha over an application area of 0.503 square meters ($m^2$) at a spray height of 20 inches (50 cm) above the average plant canopy height. Control plants were sprayed in the same manner with the solvent blank.

The treated plants and control plants were placed in a greenhouse as described above and watered by sub-irrigation to prevent wash-off of the test compounds. After approximately 2 weeks, the condition of the test plants as compared with that of the untreated plants was determined visually and scored on a scale of 0 to 100 percent where 0 corresponds to no injury or growth inhibition and 100 corresponds to complete kill. Some of the compounds tested, application rates employed, plant species tested, and results are given in Tables 4-12.

Results of testing mixtures in accordance with this disclosure and of the components of the mixtures separately against various common weeds in greenhouse trials are reported in the following tables. The reported values are of percent (%) control or percent (%) injury, visually rated. Colby's equation was used to determine the herbicidal effects expected from the mixtures (Colby, S. R. Calculation of the synergistic and antagonistic response of herbicide combinations. Weeds 1967, 15, 20-22.).

More specifically, the following equation was used to calculate the expected activity of mixtures containing two active ingredients, A and B:

$$\text{Expected} = A + B - (A \times B/100)$$

A = observed efficacy of active ingredient A at the same concentration as used in the mixture;

B = observed efficacy of active ingredient B at the same concentration as used in the mixture.

The compounds tested, application rates employed, plant species tested, and results are given in Tables 1-12. The following abbreviations are used in the following Tables:

ABUTH *Abutilon theophrasti* Medik. (velvetleaf)
AMARE *Amaranthus retroflexus* L. (redroot pigweed)
AVEFA *Avena fatua* L. (wild oat)
BRSNW *Brassica napus* (winter oilseed rape)
CHEAL *Chenopodium album* L. (common lambsquarters)
CIRAR *Cirsium arvense* (L.) Scop. (Canada thistle)
CYPES *Cyperus esculentus* L. (yellow nutsedge)
DIGSA *Digitaria sanguinalis* (L.) Scop. (large crabgrass)
EPHHL *Euphorbia heterophylla* L. (wild poinsettia)
GLXMA *Glycine max* (soybean)
HELAN *Helianthus annuus* L. (common sunflower)
IPOHE *Ipomoea hederacea* (L.) Jacq. (ivyleaf morningglory)
LOLMU *Lolium multiflorum* Lam. (Italian ryegrass)
OEOBI *Oenothera biennis* (evening primrose)
SETFA *Setaria faberi* Herrm. (giant foxtail)
SORHA *Sorghum halepense* (L.) Pers. (Johnsongrass)
SORVU *Sorghum vulgare* (common sorghum)
STEME *Stellaria media* (L.) Vill. (common chickweed)
VIOTR *Viola tricolor* L. (wild violet)
g ae/ha = grams acid equivalent per hectare
Obs = observed value of percent (%) control rated visually
Exp = expected value of percent (%) control as calculated by Colby's equation
DAA = days after application
Cmpd 1 = methyl ester of the compound of formula (I)
Cmpd 2 = propargyl ester of the compound of formula (I)
Cmpd 3 = benzyl ester of the compound of formula (I)
Cmpd 4 = potassium salt of the the compound of formula (I)

**Table 1a: Synergistic composition of Cmpd 1 and fluazifop-P-butyl**

| Application Rate (g ae/ha | | Visual Growth Reduction (%) 14 Days After Application (DAA) | | | | | | | | | | | | | | | |
|---|---|---|---|---|---|---|---|---|---|---|---|---|---|---|---|---|---|
| | | BRSNW | | CHEAL | | VIOTR | | STEME | | AVEFA | | DIGSA | | ABUTH | | CIRAR | |
| Cmpd 1 | Fluazifop-P | Obs | Exp | Obs | Exp | Obs | Exp | Obs | Exp | Obs | Exp | Obs | Exp | Obs | Exp | Obs | Exp |
| 1.25 | 0 | 0 | - | 70 | - | 10 | - | 30 | - | 0 | - | 0 | - | 80 | - | 30 | - |
| 2.5 | 0 | 5 | - | 80 | - | 10 | - | 20 | - | 0 | - | 0 | - | 85 | - | 50 | - |
| 5 | 0 | 20 | - | 93 | - | 30 | - | 40 | - | 0 | - | 0 | - | 90 | - | 30 | - |
| 0 | 52.5 | 0 | - | 0 | - | 0 | - | 0 | - | 0 | - | 70 | - | 0 | - | 0 | - |
| 0 | 105 | 0 | - | 0 | - | 0 | - | 0 | - | 0 | - | 80 | - | 0 | - | 0 | - |
| 0 | 210 | 0 | - | 0 | - | 0 | - | 0 | - | 70 | - | 85 | - | 0 | - | 0 | - |
| 1.25 | 52.5 | 0 | 0 | 93 | 70 | 30 | 10 | 20 | 30 | 0 | 0 | 90 | 70 | 87 | 80 | 40 | 30 |
| 1.25 | 105 | 10 | 0 | 97 | 70 | 40 | 10 | 20 | 30 | 40 | 0 | 90 | 80 | 90 | 80 | 50 | 30 |
| 1.25 | 210 | 10 | 0 | 95 | 70 | 30 | 10 | 20 | 30 | 95 | 70 | 93 | 85 | 80 | 80 | 50 | 30 |
| 2.5 | 52.5 | 10 | 5 | 95 | 80 | 50 | 10 | 40 | 20 | 10 | 0 | 80 | 70 | 95 | 85 | 40 | 50 |
| 2.5 | 105 | 30 | 5 | 97 | 80 | 60 | 10 | 40 | 20 | 50 | 0 | 90 | 80 | 95 | 85 | 50 | 50 |
| 2.5 | 210 | 25 | 5 | 97 | 80 | 65 | 10 | 40 | 20 | 85 | 70 | 93 | 85 | 97 | 85 | 50 | 50 |
| 5 | 52.5 | 40 | 20 | 97 | 93 | 70 | 30 | 65 | 40 | 0 | 0 | 90 | 70 | 98 | 90 | 50 | 30 |
| 5 | 105 | 40 | 20 | 97 | 93 | 60 | 30 | 60 | 40 | 10 | 0 | 90 | 80 | 97 | 90 | 40 | 30 |
| 5 | 210 | 60 | 20 | 97 | 93 | 65 | 30 | 60 | 40 | 93 | 70 | 93 | 85 | 90 | 90 | 30 | 30 |

**Table 1b: Synergistic composition of Cmpd 1 and fluazifop-P-butyl**

| Application Rate (g ae/ha) | | Visual Growth Reduction (%) 14 DAA | | | | | | | | | | | | | | | |
|---|---|---|---|---|---|---|---|---|---|---|---|---|---|---|---|---|---|
| | | SETFA | | SORVU | | AMARE | | EPHHL | | CYPES | | IPOHE | | GLXMA | | HELAN | |
| Cmpd 1 | Fluazifop- P | Obs | Exp | Obs | Exp | Obs | Exp | Obs | Exp | Obs | Exp | Obs | Exp | Obs | Exp | Obs | Exp |
| 1.25 | 0 | 0 | - | 0 | - | 50 | - | 95 | - | 50 | - | 10 | - | 70 | - | 20 | - |
| 2.5 | 0 | 0 | - | 0 | - | 60 | - | 95 | - | 90 | - | 20 | - | 95 | - | 20 | - |
| 5 | 0 | 30 | - | 0 | - | 90 | - | 95 | - | 93 | - | 20 | - | 97 | - | 40 | - |
| 0 | 52.5 | 80 | - | 70 | - | 0 | - | 0 | - | 0 | - | 0 | - | 0 | - | 0 | - |
| 0 | 105 | 80 | - | 90 | - | 0 | - | 0 | - | 0 | - | 0 | - | 0 | - | 0 | - |
| 0 | 210 | 90 | - | 100 | - | 0 | - | 0 | - | 0 | - | 0 | - | 0 | - | 0 | - |
| 1.25 | 52.5 | 85 | 80 | 85 | 70 | 80 | 50 | 90 | 95 | 80 | 50 | 20 | 10 | 97 | 70 | 20 | 20 |
| 1.25 | 105 | 93 | 80 | 100 | 90 | 90 | 50 | 97 | 95 | 70 | 50 | 20 | 10 | 95 | 70 | 25 | 20 |
| 1.25 | 210 | 95 | 90 | 100 | 100 | 60 | 50 | 97 | 95 | 90 | 50 | 20 | 10 | 97 | 70 | 20 | 20 |
| 2.5 | 52.5 | 90 | 80 | 90 | 70 | 95 | 60 | 95 | 95 | 85 | 90 | 20 | 20 | 95 | 95 | 20 | 20 |
| 2.5 | 105 | 95 | 80 | 100 | 90 | 97 | 60 | 97 | 95 | 90 | 90 | 30 | 20 | 100 | 95 | 30 | 20 |
| 2.5 | 210 | 100 | 90 | 100 | 100 | 100 | 60 | 97 | 95 | 95 | 90 | 30 | 20 | 100 | 95 | 20 | 20 |
| 5 | 52.5 | 80 | 86 | 80 | 70 | 90 | 90 | 97 | 95 | 97 | 93 | 40 | 20 | 100 | 97 | 60 | 40 |
| 5 | 105 | 85 | 86 | 100 | 90 | 97 | 90 | 97 | 95 | 97 | 93 | 40 | 20 | 100 | 97 | 65 | 40 |
| 5 | 210 | 100 | 93 | 100 | 100 | 95 | 90 | 97 | 95 | 97 | 93 | 30 | 20 | 100 | 97 | 40 | 40 |

**Table 2: Synergistic composition of Cmpd 1 and haloxyfop-P-methyl**

| | | Visual Growth Reduction (%) 14 DAA | | | | | | | | | | | | | |
|---|---|---|---|---|---|---|---|---|---|---|---|---|---|---|---|
| Application Rate (g ae/ha) | | BRSNW | | CHEAL | | VIOTR | | STEME | | AMARE | | CYPES | | IPOHE | |
| Cmpd 1 | Haloxyfop- P | Obs | Exp | Obs | Exp | Obs | Exp | Obs | Exp | Obs | Exp | Obs | Exp | Obs | Exp |
| 1.25 | 0 | 0 | - | 70 | - | 10 | - | 30 | - | 50 | - | 50 | - | 10 | - |
| 2.5 | 0 | 5 | - | 80 | - | 10 | - | 20 | - | 60 | - | 90 | - | 20 | - |
| 5 | 0 | 20 | - | 93 | - | 30 | - | 40 | - | 90 | - | 93 | - | 20 | - |
| 0 | 35 | 0 | - | 0 | - | 0 | - | 0 | - | 0 | - | 0 | - | 0 | - |
| 0 | 70 | 0 | - | 0 | - | 0 | - | 0 | - | 0 | - | 0 | - | 0 | - |
| 0 | 140 | 0 | - | 0 | - | 0 | - | 0 | - | 0 | - | 0 | - | 0 | - |
| 1.25 | 35 | 0 | 0 | 85 | 70 | 20 | 10 | 10 | 30 | 85 | 50 | 70 | 50 | 20 | 10 |
| 1.25 | 70 | 10 | 0 | 87 | 70 | 30 | 10 | 15 | 30 | 70 | 50 | 60 | 50 | 30 | 10 |
| 1.25 | 140 | 20 | 0 | 90 | 70 | 40 | 10 | 15 | 30 | 80 | 50 | 70 | 50 | 30 | 10 |
| 2.5 | 35 | 30 | 5 | 95 | 80 | 55 | 10 | 60 | 20 | 95 | 60 | 93 | 90 | 20 | 20 |
| 2.5 | 70 | 30 | 5 | 90 | 80 | 30 | 10 | 40 | 20 | 95 | 60 | 95 | 90 | 30 | 20 |
| 2.5 | 140 | 10 | 5 | 90 | 80 | 30 | 10 | 30 | 20 | 95 | 60 | 95 | 90 | 25 | 20 |
| 5 | 35 | 30 | 20 | 85 | 93 | 70 | 30 | 70 | 40 | 97 | 90 | 97 | 93 | 20 | 20 |
| 5 | 70 | 25 | 20 | 87 | 93 | 50 | 30 | 65 | 40 | 100 | 90 | 97 | 93 | 30 | 20 |
| 5 | 140 | 30 | 20 | 93 | 93 | 60 | 30 | 60 | 40 | 100 | 90 | 97 | 93 | 40 | 20 |

**Table 3: Synergistic composition of Cmpd 1 and quizalofop-P-ethyl**

| Application Rate (gae/ha) | | Visual Growth Reduction (%) 14 DAA | | | | | | | | | | | | | |
|---|---|---|---|---|---|---|---|---|---|---|---|---|---|---|---|
| | | BRSNW | | CHEAL | | VIOTR | | STEME | | CIRAR | | AMARE | | IPOHE | |
| Cmpd 1 | Quizalofop-P | Obs | Exp | Obs | Exp | Obs | Exp | Obs | Exp | Obs | Exp | Obs | Exp | Obs | Exp |
| 1.25 | 0 | 0 | - | 70 | - | 10 | - | 30 | - | 30 | - | 50 | - | 10 | - |
| 2.5 | 0 | 5 | - | 80 | - | 10 | - | 20 | - | 30 | - | 60 | - | 20 | - |
| 5 | 0 | 20 | - | 93 | - | 30 | - | 40 | - | 30 | - | 90 | - | 20 | - |
| 0 | 37.5 | 0 | - | 0 | - | 0 | - | 0 | - | 0 | - | 0 | - | 0 | - |
| 0 | 75 | 0 | - | 0 | - | 0 | - | 0 | - | 0 | - | 0 | - | 0 | - |
| 0 | 150 | 0 | - | 0 | - | 0 | - | 0 | - | 0 | - | 0 | - | 0 | - |
| 1.25 | 37.5 | 0 | 0 | 95 | 70 | 10 | 10 | 20 | 30 | 30 | 30 | 93 | 50 | 20 | 10 |
| 1.25 | 75 | 10 | 0 | 95 | 70 | 40 | 10 | 30 | 30 | 40 | 30 | 85 | 50 | 30 | 10 |
| 1.25 | 150 | 10 | 0 | 95 | 70 | 50 | 10 | 30 | 30 | 50 | 30 | 97 | 50 | 30 | 10 |
| 2.5 | 37.5 | 20 | 5 | 90 | 80 | 10 | 10 | 30 | 20 | 30 | 30 | 97 | 60 | 10 | 20 |
| 2.5 | 75 | 20 | 5 | 93 | 80 | 50 | 10 | 40 | 20 | 40 | 30 | 100 | 60 | 30 | 20 |
| 2.5 | 150 | 20 | 5 | 97 | 80 | 50 | 10 | 40 | 20 | 40 | 30 | 100 | 60 | 30 | 20 |
| 5 | 37.5 | 20 | 20 | 97 | 93 | 30 | 30 | 65 | 40 | 40 | 30 | 97 | 90 | 30 | 20 |
| 5 | 75 | 30 | 20 | 97 | 93 | 40 | 30 | 65 | 40 | 40 | 30 | 100 | 90 | 30 | 20 |
| 5 | 150 | 30 | 20 | 100 | 93 | 50 | 30 | 50 | 40 | 50 | 30 | 100 | 90 | 30 | 20 |

**Table 4. Synergistic control of OEOBI with combination of Cmpd 2 and quizalofop-P-ethyl**

| Treatment (g ae/ha) | | Percent (%) injury rated visually 14 days after application (DAA) | |
|---|---|---|---|
| Cmpd 2 | Quizalofop-P-ethyl | Obs | Exp |
| 3.75 | 0 | 65 | |
| 0 | 7.125 | 0 | |
| 0 | 14.25 | 0 | |
| 0 | 28.5 | 0 | |
| 3.75 | 7.125 | 75 | 65 |
| 3.75 | 14.25 | 75 | 65 |
| 3.75 | 28.5 | 85 | 65 |

**Table 5. Synergistic control of SORHA with combination of Cmpd 2 and quizalofop-P-ethyl**

| Treatment (g ae/ha) | | Percent (%) injury rated visually 14 DAA | |
|---|---|---|---|
| Cmpd 2 | Quizalofop-P-ethyl | Obs | Exp |
| 3.75 | 0 | 0 | |
| 7.5 | 0 | 0 | |
| 15 | 0 | 10 | |
| 0 | 7.125 | 50 | |
| 3.75 | 7.125 | 100 | 50 |
| 7.5 | 7.125 | 100 | 50 |
| 15 | 7.125 | 99 | 55 |

**Table 6. Synergistic control of AVEFA with combination of Cmpd 3 and quizalofop-P-ethyl**

| Treatment (g ae/ha) | | Percent (%) injury rated visually 14 DAA | |
|---|---|---|---|
| Cmpd 3 | Quizalofop-P-ethyl | Obs | Exp |
| 3.75 | 0 | 10 | |
| 7.5 | 0 | 0 | |
| 15 | 0 | 0 | |
| 0 | 3.56 | 15 | |
| 0 | 7.125 | 15 | |
| 0 | 14.25 | 40 | |
| 3.75 | 3.56 | 40 | 24 |
| 7.5 | 3.56 | 20 | 15 |
| 15 | 3.56 | 50 | 15 |
| 3.75 | 7.125 | 40 | 24 |
| 7.5 | 7.125 | 40 | 15 |
| 15 | 7.125 | 15 | 15 |
| 3.75 | 14.25 | 75 | 46 |

(continued)

| Treatment (g ae/ha) | | Percent (%) injury rated visually 14 DAA | |
|---|---|---|---|
| Cmpd 3 | Quizalofop-P-ethyl | Obs | Exp |
| 7.5 | 14.25 | 80 | 40 |
| 15 | 14.25 | 60 | 40 |

**Table 7. Synergistic control of DIGSA with combination of Cmpd 3 and quizalofop-P-ethyl**

| Treatment (g ae/ha) | | Percent (%) injury rated visually 14 DAA | |
|---|---|---|---|
| Cmpd 3 | Quizalofop-P-ethyl | Obs | Exp |
| 3.75 | 0 | 40 | |
| 7.5 | 0 | 40 | |
| 15 | 0 | 35 | |
| 0 | 3.56 | 20 | |
| 3.75 | 3.56 | 70 | 52 |
| 7.5 | 3.56 | 85 | 52 |
| 15 | 3.56 | 70 | 48 |

**Table 8. Synergistic control of LOLMU with combination of Cmpd 3 and quizalofop-P-ethyl**

| Treatment (g ae/ha) | | Percent (%) injury rated visually 14 DAA | |
|---|---|---|---|
| Cmpd 3 | Quizalofop-P-ethyl | Obs | Exp |
| 3.75 | 0 | 15 | |
| 7.5 | 0 | 50 | |
| 15 | 0 | 40 | |
| 0 | 3.56 | 0 | |
| 3.75 | 3.56 | 25 | 15 |
| 7.5 | 3.56 | 60 | 50 |
| 15 | 3.56 | 65 | 40 |

**Table 9. Synergistic control of DIGSA with combination of Cmpd 4 and quizalofop-P-ethyl**

| Treatment (g ae/ha) | | Percent (%) injury rated visually 14 DAA | |
|---|---|---|---|
| Cmpd 4 | Quizalofop-P-ethyl | Obs | Exp |
| 3.75 | 0 | 20 | |
| 7.5 | 0 | 15 | |
| 15 | 0 | 40 | |
| 0 | 3.56 | 20 | |
| 3.75 | 3.56 | 50 | 36 |
| 7.5 | 3.56 | 50 | 32 |
| 15 | 3.56 | 50 | 52 |

**Table 10. Synergistic control of LOLMU with combination of Cmpd 4 and quizalofop-P-ethyl**

| Treatment (g ae/ha) | | Percent (%) injury rated visually 14 DAA | |
|---|---|---|---|
| Cmpd 4 | Quizalofop-P-ethyl | Obs | Exp |
| 3.75 | 0 | 0 | |
| 7.5 | 0 | 15 | |
| 15 | 0 | 40 | |
| 0 | 3.56 | 0 | |
| 3.75 | 3.56 | 15 | 0 |
| 7.5 | 3.56 | 50 | 15 |
| 15 | 3.56 | 50 | 40 |

**Table 11. Synergistic control of SORHA with combination of Cmpd 4 and quizalofop-P-ethyl**

| Treatment (g ae/ha) | | Percent (%) injury rated visually 14 DAA | |
|---|---|---|---|
| Cmpd 4 | Quizalofop-P-ethyl | Obs | Exp |
| 3.75 | 0 | 0 | |
| 7.5 | 0 | 0 | |
| 15 | 0 | 10 | |
| 0 | 7.125 | 50 | |
| 3.75 | 7.125 | 99 | 50 |
| 7.5 | 7.125 | 95 | 50 |
| 15 | 7.125 | 95 | 55 |

**Table 12. Synergistic control of OEOBI with combination of Cmpd 4 and quizalofop-P-ethyl**

| Treatment (g ae/ha) | | Percent (%) injury rated visually 14 DAA | |
|---|---|---|---|
| Cmpd 4 | Quizalofop-P-ethyl | Obs | Exp |
| 3.75 | 0 | 50 | |
| 7.5 | 0 | 80 | |
| 0 | 7.125 | 0 | |
| 0 | 14.25 | 0 | |
| 0 | 28.5 | 0 | |
| 3.75 | 7.125 | 80 | 50 |
| 7.5 | 7.125 | 100 | 80 |
| 3.75 | 14.25 | 75 | 50 |
| 7.5 | 14.25 | 90 | 80 |
| 3.75 | 28.5 | 80 | 50 |
| 7.5 | 28.5 | 90 | 80 |

## Claims

1. An herbicidal composition comprising a herbicidally effective amount of a synergistic combination of (a) a compound of formula (I)

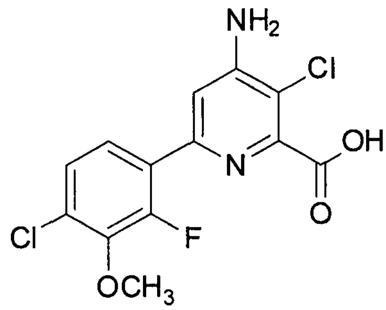

(I)

or an agriculturally acceptable salt or ester thereof and (b) an aryloxyphenoxy propionate ACCase inhibitor herbicide selected from the group consisting of fluazifop-P, haloxyfop-P, and quizalofop-P or an agriculturally acceptable salt or ester thereof, provided that the composition does not contain glufosinate or its salts, L-glufosinate or its salts, or bialaphos or its salts.

2. The composition of claim 1, wherein (a) is the methyl ester, benzyl ester, propargyl ester, or potassium salt of the compound of formula (I).

3. The composition of claim 1, further comprising a herbicide safener.

4. The composition of claim 1, wherein (b) is fluazifop-P or an agriculturally acceptable salt or ester thereof and the weight ratio of (a) to (b) is from 1-40 of (a) to 35-560 of (b), preferably from 1-40 of (a) to 70-210 of (b), more preferably from 1.25-5 of (a) to 70-210 of (b), or
wherein (b) is haloxyfop-P or an agriculturally acceptable salt or ester thereof and the weight ratio of (a) to (b) is from 1-40 of (a) to 20-560 of (b), preferably from 1-40 of (a) to 35-150 of (b), more preferably from 1.25-5 of (a) to 35-150 of (b), or wherein (b) is quizalofop-P or an agriculturally acceptable salt or ester thereof and the weight ratio of (a) to (b) is from 1-40 of (a) to 3.5-560 of (b), preferably from 1-40 of (a) to 3.5-150 of (b), more preferably from 1.25-15 of (a) to 3.5-150 of (b).

5. The composition of any of claims 1-4, wherein the composition is synergistic in control of *Brassica napus* (BRSNW), *Chenopodium album* L. (CHEAL), *Viola tricolor* L. (VIOTR), *Stellaria media* (L.) Vill. (STEME), *Avena fatua* L. (AVEFA), *Digitaria sanguinalis* (L.) Scop. (DIGSA), *Abutilon theophrasti* Medik. (ABUTH), *Cirsium arvense* (L.) Scop. (CIRAR), *Setaria faberi* Herrm. (SETFA), *Sorghum vulgare* (SORVU), *Amaranthus retroflexus* L. (AMARE), *Euphorbia heterophylla* L. (EPHHL), *Cyperus esculentus* L. (CYPES), *Ipomoea hederacea* (L.) Jacq. (IPOHE), *Glycine max* (GLXMA), *Helianthus annuus* L. (HELAN), *Oenothera biennis* (OEOBI), *Lolium multiflorum* Lam. (LOLMU), or *Sorghum halepense* (L.) Pers. (SORHA) as determined by the Colby equation.

6. A method of controlling undesirable vegetation which comprises applying a herbicidally effective amount of:

(a) a compound of the formula (I)

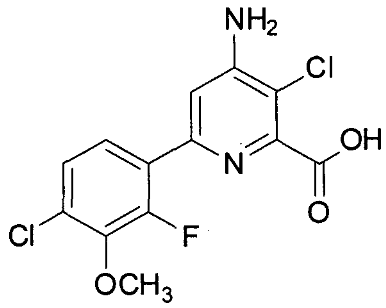

(I)

or an agriculturally acceptable salt or ester thereof and
(b) an aryloxyphenoxy propionate ACCase inhibitor herbicide selected from the group consisting of fluazifop-P, haloxyfop-P, and quizalofop-P or an agriculturally acceptable salt or ester thereof, with the proviso that no glufosinate or its salts, L-glufosinate or its salts, or bialaphos or its salts is also applied, wherein the combination of (a) and (b) exhibits synergy.

**7.** The method of claim 6, wherein the undesirable vegetation is controlled in winter/spring oilseed rape, winter/spring canola, vegetables, *Brassica* spp, ornamentals, rice, wheat, triticale, barley, oats, rye, sorghum, corn/maize, sunflower, row crops, pastures, grasslands, rangelands, fallowland, sugarcane, turf, tree and vine orchards, aquatics, and industrial vegetation management (IVM) and rights-of-way.

**8.** The method of claim 6, wherein (a) is the methyl ester of the compound of formula (I), (b) is fluazifop-P or an agriculturally acceptable salt or ester thereof, (a) is applied at a rate of 1-40 g ae/ha, and (b) is applied at a rate of 35-560 g ae/ha, preferably wherein (a) is applied at a rate of 1.25-5 g ae/ha, and (b) is applied at a rate of 70-210 g ae/ha or

(a) is the methyl ester of the compound of formula (I), (b) is haloxyfop-P or an agriculturally acceptable salt or ester thereof, (a) is applied at a rate of 1-40 g ae/ha, and (b) is applied at a rate of 20-560 g ae/ha, preferably wherein (a) is applied at a rate of 1.25-5 g ae/ha, and (b) is applied at a rate of 35-150 g ae/ha or
(a) is the methyl ester, benzyl ester, propargyl ester, or potassium salt of the compound of formula (I), (b) is quizalofop-P or an agriculturally acceptable salt or ester thereof, (a) is applied at a rate of 1-40 g ae/ha, and (b) is applied at a rate of 3.5-560 g ae/ha, preferably (a) is applied at a rate of 1.25-15 g ae/ha, and (b) is applied at a rate of 3.5-150 g ae/ha.

**9.** The method of any one of claims 6-8, wherein the undesirable vegetation is immature.

**10.** The method of any one of claims 6-8, wherein the (a) and (b) are applied pre-emergently or post-emergently.

**11.** The method of any one of claims 6-10, wherein the undesirable vegetation is BRSNW, CHEAL, VIOTR, STEME, AVEFA, DIGSA, ABUTH, CIRAR, SETFA, SORVU, AMARE, EPHHL, CYPES, IPOHE, GLXMA, HELAN, OEOBI, LOLMU, or SORHA.

**12.** The method of any one of claims 6-11, wherein the undesirable vegetation is controlled in a crop that is tolerant to glyphosate, glufosinate, dicamba, phenoxy auxins, pyridyloxy auxins, aryloxyphenoxypropionates, acetyl CoA carboxylase (ACCase) inhibitors, imidazolinones, acetolactate synthase (ALS) inhibitors, 4-hydroxyphenyl-pyruvate dioxygenase (HPPD) inhibitors, protoporphyrinogen oxidase (PPO) inhibitors, triazines, or bromoxynil, preferably wherein the tolerant crop preferably possesses multiple or stacked traits conferring tolerance to multiple herbicides or multiple modes-of-action, wherein the undesirable vegetation more preferably comprises a herbicide resistant or tolerant weed, which even more preferably is a biotype with resistance or tolerance to multiple herbicides, multiple chemical classes, or multiple herbicide modes-of-action or a biotype resistant or tolerant to acetolactate synthase (ALS) inhibitors, photosystem II inhibitors, acetyl CoA carboxylase (ACCase) inhibitors, synthetic auxins, photosystem I inhibitors, 5-enolpyruvylshikimate-3-phosphate (EPSP) synthase inhibitors, microtubule assembly inhibitors, lipid synthesis inhibitors, protoporphyrinogen oxidase (PPO) inhibitors, carotenoid biosynthesis inhibitors, very long chain fatty acid (VLCFA) inhibitors, phytoene desaturase (PDS) inhibitors, glutamine synthetase inhibitors, 4-hydroxyphenyl-pyruvate-dioxygenase (HPPD) inhibitors, mitosis inhibitors, cellulose biosynthesis inhibitors, herbicides

with multiple modes-of-action, quinclorac, arylaminopropionic acids, difenzoquat, endothall, or organoarsenicals.

**13.** The method of claim 6 which comprises applying the composition of any of claims 1-5.

**14.** The composition of claim 1, wherein (b) is fluazifop-P or an agriculturally acceptable salt or ester thereof, and the weight ratio of (a) to (b) is from 1:560 to 1:1, preferably from 1:170 to 1:10 or
wherein (b) is haloxyfop-P or an agriculturally acceptable salt or ester thereof, and the weight ratio of (a) to (b) is from 1:560 to 1:1, preferably from 1:120 to 1:7 or wherein (b) is quizalofop-P or an agriculturally acceptable salt or ester thereof, and the weight ratio of (a) to (b) is from 1:560 to 11.2:1, preferably from 1:120 to 4.2:1.

**Patentansprüche**

**1.** Eine herbizide Zusammensetzung umfassend eine herbizid wirksame Menge einer synergistischen Kombination von (a) einer Verbindung der Formel (I)

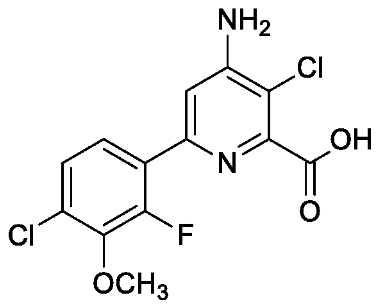

(I) ,

oder eines landwirtschaftlich akzeptablen Salzes oder entsprechenden Esters derselben und (b) eines ACCase-Inhibitor-Herbizids vom Arylphenoxypropionsäureestertyp, ausgewählt aus der Gruppe bestehend aus Fluazifop-P, Haloxyfop-P und Quizalofop-P oder eines landwirtschaftlich akzeptablen Salzes oder eines entsprechenden Esters davon, vorausgesetzt, dass die Zusammensetzung nicht Glufosinat oder seine Salze, L-Glufosinat oder seine Salze oder Bialaphos oder seine Salze enthält.

**2.** Die Zusammensetzung gemäß Anspruch 1, wobei (a) der Methylester, Benzylester, Propargylester oder das Kaliumsalz der Verbindung der Formel (I) ist.

**3.** Die Zusammensetzung gemäß Anspruch 1, weiterhin umfassend einen Herbizid-Safener.

**4.** Die Zusammensetzung gemäß Anspruch 1, wobei (b) Fluazifop-P oder ein landwirtschaftlich akzeptables Salz oder ein entsprechender Ester davon ist und das Gewichtsverhältnis von (a) zu (b) von 1 bis 40 an (a) zu 35 bis 560 an (b), vorzugsweise von 1 bis 40 an (a) zu 70 bis 210 an (b), bevorzugter von 1,25 bis 5 an (a) zu 70 bis 210 an (b) beträgt oder wobei (b) Haloxyfop-P oder ein landwirtschaftlich akzeptables Salz oder ein entsprechender Ester davon ist und das Gewichtsverhältnis von (a) zu (b) von 1 bis 40 an (a) zu 20 bis 560 an (b), vorzugsweise von 1 bis 40 an (a) zu 35 bis 150 an (b), bevorzugter von 1,25 bis 5 an (a) zu 35 bis 150 an (b) beträgt oder
wobei (b) Quizalofop-P oder ein landwirtschaftlich akzeptables Salz oder ein entsprechender Ester davon ist und das Gewichtsverhältnis von (a) zu (b) von 1 bis 40 an (a) zu 3,5 bis 560 an (b), vorzugsweise von 1 bis 40 an (a) zu 3,5 bis 150 an (b), bevorzugter von 1,25 bis 15 an (a) zu 3,5 bis 150 an (b) beträgt.

**5.** Die Zusammensetzung gemäß einem der Ansprüche 1 bis 4, wobei die Zusammensetzung synergistisch in der Bekämpfung von *Brassica napus* (BRSNW), *Chenopodium album* L. (CHEAL), *Viola tricolor* L. (VIOTR), *Stellaria media* (L.) Vill. (STEME), *Avena fatua* L. (AVEFA), *Digitaria sanguinalis* (L.) Scop. (DIGSA), *Abutilon theophrasti* Medik. (ABUTH), *Cirsium arvense* (L.) Scop. (CIRAR), *Setaria faberi* Herrm. (SETFA), *Sorghum vulgare* (SORVU), *Amaranthus retroflexus* L. (AMARE), *Euphorbia heterophylla* L. (EPHHL), *Cyperus esculentus* L. (CYPES), *Ipomoea hederacea* (L.) Jacq. (IPOHE), *Glycine max* (GLXMA), *Helianthus annuus* L. (HELAN), *Oenothera biennis* (OEOBI), *Lolium multiflorum* Lam. (LOLMU) oder *Sorghum halepense* (L.) Pers. (SORHA) ist, wie durch die Colby-Gleichung bestimmt.

6. Ein Verfahren zur Bekämpfung unerwünschter Vegetation, welches das Anwenden einer herbizid wirksamen Menge von

(a) einer Verbindung der Formel (I)

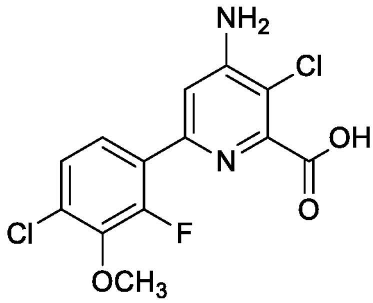

(I)

oder eines landwirtschaftlich akzeptablen Salzes oder Esters derselben und
(b) eines ACCase-Inhibitor-Herbizids vom Arylphenoxypropionsäureestertyp, ausgewählt aus der Gruppe bestehend aus Fluazifop-P, Haloxyfop-P und Quizalofop-P oder eines landwirtschaftlich akzeptablen Salzes oder Esters davon, unter der Voraussetzung, dass kein Glufosinat oder seine Salze, L-Glufosinat oder seine Salze oder Bialaphos oder seine Salze ebenfalls angewandt werden, wobei die Kombination von (a) und (b) Synergismus zeigt.

7. Das Verfahren gemäß Anspruch 6, wobei die unerwünschte Vegetation in Winter-/Sommerraps, Winter-/Sommercanola, Gemüsen, *Brassica* spp, Zierpflanzen, Reis, Weizen, Tritikale, Gerste, Hafer, Roggen, Sorghum, Mais/Welschkorn, Sonnenblume, Reihenkulturen, Wiesen, Grasland, Weiden, Brachland, Zuckerrohr, Rasen, Baumschulen und Weingärten, in wässriger Umgebung und im industriellen Vegetationsmanagement (IVM) und entlang von Verkehrswegen bekämpft wird.

8. Das Verfahren gemäß Anspruch 6, wobei (a) der Methylester der Verbindung der Formel (I) ist, (b) Fluazifop-P oder ein landwirtschaftlich akzeptables Salz oder ein entsprechender Ester davon ist, (a) in einer Menge von 1 bis 40 g ae/ha angewandt wird und (b) in einer Menge von 35 bis 560 g ae/ha angewandt wird, vorzugsweise wobei (a) in einer Menge von 1,25 bis 5 g ae/ha angewandt wird und (b) in einer Menge von 70 bis 210 g ae/ha angewandt wird oder

(a) der Methylester der Verbindung der Formel (I) ist, (b) Haloxyfop-P oder ein landwirtschaftlich akzeptables Salz oder ein entsprechender Ester davon ist, (a) in einer Menge von 1 bis 40 g ae/ha angewandt wird und (b) in einer Menge von 20 bis 560 g ae/ha angewandt wird, vorzugsweise wobei (a) in einer Menge von 1,25 bis 5 g ae/ha angewandt wird und (b) in einer Menge von 35 bis 150 g ae/ha angewandt wird oder
(a) der Methylester, Benzylester, Propargylester oder das Kaliumsalz der Verbindung der Formel (I) ist, (b) Quialofop-P oder ein landwirtschaftlich akzeptables Salz oder ein entsprechender Ester davon ist, (a) in einer Menge von 1 bis 40 g ae/ha angewandt wird und (b) in einer Menge von 3,5 bis 560 g ae/ha angewandt wird, vorzugsweise (a) wobei in einer Menge von 1,25 bis 15 g ae/ha angewandt wird und (b) in einer Menge von 3,5 bis 150 g ae/ha angewandt wird.

9. Das Verfahren gemäß einem der Ansprüche 6 bis 8, wobei die unerwünschte Vegetation unreif ist.

10. Das Verfahren gemäß einem der Ansprüche 6 bis 8, wobei (a) und (b) im Vorlauf oder im Nachlauf angewandt werden.

11. Das Verfahren gemäß einem der Ansprüche 6 bis 10, wobei die unerwünschte Vegetation BRSNW, CHEAL, VIOTR, STEME, AVEFA, DIGSA, ABUTH, CIRAR, SETFA, SORVU, AMARE, EPHHL, CYPES, IPOHE, GLXMA, HELAN, OEOBI, LOLMU oder SORHA ist.

12. Das Verfahren gemäß einem der Ansprüche 6 bis 11, wobei die unerwünschte Vegetation in einer Nutzpflanze bekämpft wird, die tolerant gegenüber Glyphosat, Glufosinat, Dicamba, Phenoxyauxinen, Pyridyloxyauxinen, Aryloxyphenoxypropionsäureestern, Acetyl-CoA-Carboxylase-(ACCase)-Inhibitoren, Imidazolinonen, Acetolactatsynthase-(ALS)-Inhibitoren, 4-Hydroxyphenyl-Pyruvat-Dioxygenase-(HPPD)-Inhibitoren, Protoporphyrinogen-Oxidase-(PPO)-Inhibitors, Triazinen oder Bromoxynil ist, wobei die tolerante Nutzpflanze vorzugsweise mehrere oder gestapelte Merkmale, die Toleranz gegenüber mehreren Herbiziden oder mehreren Wirkweisen verleihen, besitzt, wobei die unerwünschte Vegetation bevorzugter ein herbizidresistentes oder -tolerantes Unkraut umfasst, welches noch bevorzugter ein Biotyp mit Resistenz oder Toleranz gegenüber mehreren Herbiziden, mehreren chemischen Klassen oder mehreren herbiziden Wirkweisen oder ein Biotyp, resistent oder tolerant gegenüber Acetolactatsynthase-Inhibitoren, Photosystem-II-Inhibitoren, Acetyl-CoA-Carboxylase-(ACCase)-Inhibitoren, synthetischen Auxinen, Photosystem-I-Inhibitoren, 5-Enolpyruvylshikimat-3-phosphatsynthase-(EPSP)-Inhibitoren, Microtubuli-Organisationsinhibitoren, Lipidsynthese-Inhibitoren, Protoporphyrinogenoxidase-(PPO)-Inhibitoren, Inhibitoren der Carotenoid-Biosynthese, Inhibitoren der Synthese sehr langkettiger Fettsäuren (VLCFA), Phytoendesaturase-(PDS)-Inhibitoren, Glutaminsynthase-Inhibitoren, 4-Hydroxyphenylpyruvatdioxygenase-(HPPD)-Inhibitoren, Mitose-Inhibitoren, Inhibitoren der Biosynthese von Cellulose, Herbizide mit mehreren Wirkweisen, Quinclorac, Arylaminopropionsäuren, Difenzoquat, Endothall oder Organoarsenverbindungen ist, ist.

**13.** Das Verfahren gemäß Anspruch 6, welches das Anwenden der Zusammensetzung gemäß einem der Ansprüche 1 bis 5 umfasst.

**14.** Die Zusammensetzung gemäß Anspruch 1, wobei (b) Fluazifop-P oder ein landwirtschaftlich akzeptables Salz oder ein entsprechender Ester davon ist und das Gewichtsverhältnis von (a) zu (b) von 1:560 bis 1:1, vorzugsweise von 1:170 bis 1:10 beträgt oder
wobei (b) Haloxyfop-P oder ein landwirtschaftlich akzeptables Salz oder ein entsprechender Ester davon ist und das Gewichtsverhältnis von (a) zu (b) von 1:560 bis 1:1, vorzugsweise von 1:120 bis 1:7 beträgt oder
wobei (b) Quizalofop-P oder ein landwirtschaftlich akzeptables Salz oder ein entsprechender Ester davon ist und das Gewichtsverhältnis von (a) zu (b) von 1:560 bis 11,2:1, vorzugsweise von 1:120 bis 4,2:1 beträgt.

**Revendications**

**1.** Composition herbicide comprenant une quantité à effet herbicide d'une association synergique de (a) un composé de formule (I)

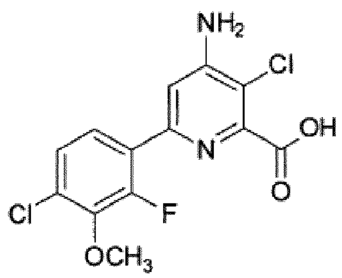

(I)

ou un sel ou ester acceptable en agriculture d'un tel composé et (b) un herbicide inhibiteur d'aryloxyphénoxy propionate ACCase choisi dans l'ensemble constitué par le fluazifop-P, l'haloxyfop-P et le quizalofop-P ou un sel ou ester acceptable en agriculture d'un tel herbicide, étant entendu que la composition ne contient pas de glufosinate ou ses sels, de L-glufosinate ou ses sels, ni de bialaphos ou ses sels.

**2.** Composition selon la revendication 1, dans laquelle (a) est l'ester de méthyle, l'ester de benzyle, l'ester de propargyle ou le sel de potassium du composé de formule (I).

**3.** Composition selon la revendication 1, comprenant encore un phytoprotecteur contre les herbicides.

**4.** Composition selon la revendication 1, dans laquelle (b) est le fluazifop-P ou un sel ou ester acceptable en agriculture de celui-ci et le rapport pondéral de (a) à (b) vaut de 1-40 de (a) à 35-560 de (b), de préférence de 1-40 de (a) à 70-210 de (b), de façon plus particulièrement préférée de 1,25-5 de (a) à 70-210 de (b), ou
dans laquelle (b) est l'haloxyfop-P ou un sel ou ester acceptable en agriculture de celui-ci et le rapport pondéral de (a) à (b) vaut de 1-40 de (a) à 20-560 de (b), de préférence de 1-40 de (a) à 35-150 de (b), de façon plus particulièrement préférée de 1,25-5 de (a) à 35-150 de (b), ou

dans laquelle (b) est le quizalofop-P ou un sel ou ester acceptable en agriculture de celui-ci et le rapport pondéral de (a) à (b) vaut de 1-40 de (a) à 3,5-560 de (b), de préférence de 1-40 de (a) à 3,5-150 de (b), de façon plus particulièrement préférée de 1,25-15 de (a) à 3,5-150 de (b).

**5.** Composition selon l'une quelconque des revendications 1 à 4, dans laquelle la composition est synergique dans la lutte contre *Brassica napus* (BRSNW), *Chenopodium album* L. (CHEAL), *Viola tricolor* L. (VIOTR), *Stellaria media* (L.) Vill. (STEME), *Avena fatua* L. (AVEFA), *Digitaria sanguinalis* (L.) Scop. (DIGSA), *Abutilon theophrasti* Medik. (ABUTH), *Cirsium arvense* (L.) Scop. (CIRAR), *Setaria faberi* Herrm. (SETFA), *Sorghum vulgare* (SORVU), *Amaranthus retroflexus* L. (AMARE), *Euphorbia heterophylla* L. (EPHHL), *Cyperus esculentus* L. (CYPES), *Ipomoea hederacea* (L.) Jacq. (IPOHE), *Glycine max* (GLXMA), *Helianthus annuus* L. (HELAN), *Oenothera biennis* (OEOBI), *Lolium multiflorum* Lam. (LOLMU), ou *Sorghum halepense* (L.) Pers. (SORHA) comme déterminé par l'équation de Colby.

**6.** Procédé de lutte contre une végétation indésirable, qui comprend le fait d'appliquer une quantité à effet herbicide de :

a) un composé de formule (I)

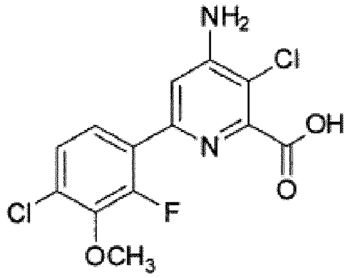

(I)

ou un sel ou ester acceptable en agriculture d'un tel composé et

(b) un herbicide inhibiteur d'aryloxyphénoxy propionate ACCase choisi dans l'ensemble constitué par le fluazifop-P, l'haloxyfop-P et le quizalofop-P ou un sel ou ester acceptable en agriculture d'un tel herbicide, étant entendu que n'est/ne sont pas également appliqué(s) de glufosinate ou ses sels, de L-glufosinate ou ses sels, ni de bialaphos ou ses sels, où l'association de (a) et (b) présente une synergie.

**7.** Procédé selon la revendication 6, dans lequel la végétation indésirable est combattue dans des cultures de colza oléagineux d'hiver/de printemps, de colza canola d'hiver/de printemps, de légumes, de *Brassica* spp., de plantes ornementales, de riz, de blé, de triticale, d'orge, d'avoine, de seigle, de sorgho, de maïs, de tournesol, des cultures en lignes, des pâturages, des herbages, des prairies, des jachères, des cultures de canne à sucre, du gazon, des vergers et des vignes, des plans d'eau, et des zones d'aménagement végétal intégré (IVM) et des voies de passage.

**8.** Procédé selon la revendication 6, dans lequel (a) est l'ester de méthyle du composé de formule (I), (b) est le fluazifop-P ou un sel ou ester acceptable en agriculture de celui-ci, (a) est appliqué à un taux de 1-40 g éa/ha, et (b) est appliqué à un taux de 35-560 g éa/ha, de préférence dans lequel (a) est appliqué à un taux de 1,25-5 g éa/ha, et (b) est appliqué à un taux de 70-210 g éa/ha ou

(a) est l'ester de méthyle du composé de formule (I), (b) est l'haloxyfop-P ou un sel ou ester acceptable en agriculture de celui-ci, (a) est appliqué à un taux de 1-40 g éa/ha, et (b) est appliqué à un taux de 20-560 g éa/ha, de préférence dans lequel (a) est appliqué à un taux de 1,25-5 g éa/ha, et (b) est appliqué à un taux de 35-150 g éa/ha ou

(a) est l'ester de méthyle, l'ester de benzyle, l'ester de propargyle, ou le sel de potassium du composé de formule (I), (b) est le quizalofop-P ou un sel ou ester acceptable en agriculture de celui-ci, (a) est appliqué à un taux de 1-40 g éa/ha, et (b) est appliqué à un taux de 3,5-560 g éa/ha, de préférence (a) est appliqué à un taux de 1,25-15 g éa/ha, et (b) est appliqué à un taux de 3,5-150 g éa/ha

**9.** Procédé selon l'une quelconque des revendications 6 à 8, dans lequel la végétation indésirable est immature.

**10.** Procédé selon l'une quelconque des revendications 6 à 8, dans lequel on applique les composés (a) et (b) en pré-levée ou en post-levée.

**11.** Procédé selon l'une quelconque des revendications 6 à 10, dans lequel la végétation indésirable est BRSNW, CHEAL, VIOTR, STEME, AVEFA, DIGSA, ABUTH, CIRAR, SETFA, SORVU, AMARE, EPHHL, CYPES, IPOHE, GLXMA, HELAN, OEOBI, LOLMU, ou SORHA.

**12.** Procédé selon l'une quelconque des revendications 6 à 11, dans lequel on lutte contre la végétation indésirable dans une culture de plante qui est tolérante au glyphosate, au glufosinate, au dicamba, aux auxines de type phénoxy, aux auxines de type pyridyloxy, aux aryloxyphénoxypropionates, aux inhibiteurs d'acétyl CoA carboxylase (ACCase), aux imidazolinones, aux inhibiteurs d'acétolactate synthase (ALS), aux inhibiteurs de 4-hydroxyphényl-pyruvate dioxygénase (HPPD), aux inhibiteurs de protoporphyrinogène oxydase (PPO), aux triazines, ou au bromoxynil, de préférence dans lequel la plante cultivée tolérante possède de préférence des caractères multiples ou empilés conférant une tolérance à de multiples herbicides ou de multiples modes d'action, dans lequel la végétation indésirable comprend de façon plus particulièrement préférée une adventice tolérante ou résistante à des herbicides qui, de façon encore plus particulièrement préférée, est un biotype à résistance ou tolérance à de multiples herbicides, de multiples classes chimiques, ou de multiples modes d'action d'herbicides ou un biotype résistant ou tolérant aux inhibiteurs d'acétolactate synthase (ALS), aux inhibiteurs du photosystème II, aux inhibiteurs d'acétyl CoA carboxylase (ACCase), aux auxines synthétiques, aux inhibiteurs du photosystème I, aux inhibiteurs de 5-énolpyruvylshikimate-3-phosphate (EPSP) synthase, aux inhibiteurs de l'assemblage des microtubules, aux inhibiteurs de la synthèse des lipides, aux inhibiteurs de protoporphyrinogène oxydase (PPO), aux inhibiteurs de la biosynthèse des caroténoïdes, aux inhibiteurs d'acides gras à très longue chaîne (AGTLC), aux inhibiteurs de phytoène désaturase (PDS), aux inhibiteurs de glutamine synthétase, aux inhibiteurs de 4-hydroxyphényl-pyruvate dioxygénase (HPPD), aux inhibiteurs de la mitose, aux inhibiteurs de la biosynthèse de la cellulose, à des herbicides à multiples modes d'action, au quinclorac, aux acides arylaminopropioniques, au difenzoquat, à l'endothall, ou aux organoarsénieux.

**13.** Procédé selon la revendication 6, qui comprend le fait d'appliquer la composition selon l'une quelconque des revendications 1 à 5.

**14.** Composition selon la revendication 1, dans laquelle (b) est le fluazifop-P ou un sel ou ester acceptable en agriculture de celui-ci, et le rapport pondéral de (a) à (b) vaut de 1:560 à 1:1, de préférence de 1:170 à 1:10 ou
dans laquelle (b) est l'haloxyfop-P ou un sel ou ester acceptable en agriculture de celui-ci, et le rapport pondéral de (a) à (b) vaut de 1:560 à 1:1, de préférence de 1:120 à 1:7 ou
dans laquelle (b) est le quizalofop-P ou un sel ou ester acceptable en agriculture de celui-ci, et le rapport pondéral de (a) à (b) vaut de 1:560 à 11,2:1, de préférence de 1:120 à 4,2:1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20110287933 A1
- US 20090062121 A
- US 7314849 B2


### Non-patent literature cited in the description


- The Pesticide Manual: A World Compendium. The Pesticide Manual. BCPC, 2009
- an interaction of two or more factors such that the effect when combined is greater than the predicted effect based on the response of each factor applied separately. Herbicide Handbook. Lawrence: Weed Science Society of America, 2007
- **COLBY, S. R.** Calculation of the synergistic and antagonistic response of herbicide combinations. *Weeds,* 1967, vol. 15, 20-22
- McCutcheon's Detergents and Emulsifiers Annual. MC Publishing Corp, 1998
- Encyclopedia of Surfactants. Chemical Publishing Co, 1980, vol. I-III